# NEUE EUROPÄISCHE PATENTSCHRIFT

(11) **EP 1 756 197 B2**
(45) Veröffentlichungstag und Bekanntmachung des Hinweises auf die Entscheidung über den Einspruch: **08.04.2015**
(45) Hinweis auf die Patenterteilung: 21.04.2010
(21) Anmeldenummer: 05768519.0
(22) Anmeldetag: 25.05.2005
(51) Int. Cl.: C08G 63/91, C08G 63/20, C09D 167/07, C09J 167/07, C09J 167/00, C09D 167/00

(54) **HOCHFUNKTIONELLE, HOCH- ODER HYPERVERZWEIGTE POLYESTER SOWIE DEREN HERSTELLUNG UND VERWENDUNG**
HIGHLY FUNCTIONAL, HIGHLY BRANCHED OR HYPERBRANCHED POLYESTERS, THE PRODUCTION THEREOF AND THE USE OF THE SAME
POLYESTERS HAUTEMENT FONCTIONNELS, HAUTEMENT RAMIFIES OU HYPER RAMIFIES, LEUR PRODUCTION ET LEUR UTILISATION

(30) Priorität: 01.06.2004 DE 102004026904
(43) Veröffentlichungstag der Anmeldung: 28.02.2007
(73) Patentinhaber: BASF SE, 67056 Ludwigshafen (DE)
(72) Erfinder: BRUCHMANN, Bernd, 67251 Freinsheim (DE); STUMBE, Jean-Francois, F-67200 Strasbourg (FR); SCHÄFER, Harald, 68219 Mannheim (DE); BEDAT, Joelle, F-67850 Offendorf (FR)
(86) Internationale Anmeldenummer: PCT/EP2005/005631
(87) Internationale Veröffentlichungsnummer: WO 2005/118677

(56) Entgegenhaltungen:
- WO-A-03/093343
- WO-A1-98/18846
- WO-A1-99/51660
- DE-A1- 10 240 817
- US-A- 3 288 732
- US-A- 4 370 441
- US-B1- 6 569 956
- QIU T ET AL: "MODIFICATION OF END-GROUPS OF ALIPHATIC HYPERBRANCHED POLYESTER" POLYMERS FOR ADVANCED TECHNOLOGIES, JOHN WILEY AND SONS, CHICHESTER, GB, Bd. 15, Nr. 1/2, Januar 2004 (2004-01), Seiten 65-69, XP001224338 ISSN: 1042-7147
- KUMAR A., KULSHRESTHA A.S., GAO W., GROSS R.A.: "Versatile route to polyol polyesters by lipase catalysis" MACROMOLECULES, Bd. 36, 2003, Seiten 8219-8221, XP002345506
- FU K., KULSHRESTHA A.K., GAO W., GROSS R.A., BAIARDO M., SCANDOLA M.: "Physical Characterization of sorbitol or glycerol containing aliphatic copolyesters synthesized by lipase -catalysed polymerization" MACROMOLECULES, Bd. 36, 2003, Seiten 9804-9808, XP002345507
- DATABASE WPI Section Ch, Week 199420 Derwent Publications Ltd., London, GB; Class A21, AN 1994-164218 XP002345514 -& JP 06 108027 A (TOYOBO KK) 19. April 1994 (1994-04-19)
- Übersetzung zu D2
- J.-F. STUMBÉ ET AL.: 'Hyperbranched Polyesters Based on Adipic Acid and Glycerol' MACROMOL. RAPID. COMMUN. Bd. 25, 2004, Seiten 921 - 924
- Screenshot Journal-Homepage Wiley Verlag

## Beschreibung

Die vorliegende Erfindung betrifft gezielt aufgebaute hochfunktionelle, hoch- oder hyperverzweigte Polyester auf Basis von Di-, Tri- oder Polycarbonsäuren und Di-, Tri- oder Polyolen, Verfahren zu ihrer Herstellung sowie ihre Verwendung.

Die erfindungsgemäßen hochfunktionellen, hoch- oder hyperverzweigten Polyester können u.a. als Haftvermittler, zum Beispiel in Druckfarben, als Thixotropiermittel oder als Bausteine zur Herstellung von Polyadditions- oder Polykondensationspolymeren, zum Beispiel von Lacken, Überzügen, Klebstoffen, Dichtmassen, Giesselastomeren oder Schaumstoffen technisch vorteilhaft eingesetzt werden, sowie als Bestandteil von Bindemitteln, gegebenenfalls mit anderen Komponenten wie z.B. Isocyanaten, Epoxygruppen-enthaltenden Bindemitteln oder Alkydharzen, in Klebstoffen, Druckfarben, Beschichtungen, Schaumstoffen, Überzügen und Lacken.

Polyester werden üblicherweise aus der Reaktion von Carbonsäuren mit Alkoholen erhalten. Technisch bedeutend sind aromatische Polyester, d.h. Polyester mit einer Säurekomponente, bei denen mindestens eine Carboxygruppe an einen aromatischen Ring gebunden ist, die zum Beispiel aus Phthalsäure, Isophthalsäure oder Terephthalsäure und Ethandiol, Propandiol oder Butandiol hergestellt werden, und aliphatische Polyester, d.h. Polyester mit einer Säurekomponente, bei denen alle Carboxygruppen an aliphatische oder cycloaliphatische Kohlenstoffatome gebunden sind, hergestellt aus Bernsteinsäure, Glutarsäure oder Adipinsäure mit Ethandiol, Propandiol, Butandiol, Pentandiol oder Hexandiol. Siehe dazu auch Becker/Braun, Kunststoff-Handbuch Bd. 3/1, Polycarbonate, Polyacetale, Polyester, Celluloseester, Carl-Hanser-Verlag, München 1992, Seiten 9 - 116 und Becker/Braun, Kunststoff-Handbuch Bd. 7, Polyurethane, Carl-Hanser-Verlag, München 1993, Seiten 67 - 75. Die hier beschriebenen aromatischen oder aliphatischen Polyester sind in der Regel linear, streng difunktionell, oder aber mit einem geringen Verzweigungsgrad aufgebaut.

Polyester mit einer OH-Funktionalität größer als zwei sind ebenfalls bekannt.
So beschreibt WO 02/34814 ein Verfahren zur Herstellung von Polyestern, bei dem bis zu 3 mol% eines trifunktionellen Alkohols oder einer trifunktionellen Carbonsäure eingesetzt werden.

Aufgrund des geringen Gehalts an trifunktionellem Alkohol wird hier jedoch nur ein geringer Verzweigungsgrad erreicht.

In US 4,749,728 wird ein Verfahren zur Herstellung eines Polyesters aus Trimethylolpropan und Adipinsäure beschrieben. Das Verfahren wird in Abwesenheit von Lösemitteln und Katalysatoren durchgeführt. Das bei der Reaktion gebildete Wasser wird durch einfaches Abdestillieren entfernt. Die so erhaltenen Produkte lassen sich beispielsweise mit Epoxiden umsetzen und zu thermisch aushärtenden Beschichtungssystemen verarbeiten.

Dadurch, daß ausschließlich trifunktioneller Alkohol eingesetzt wird, kann hier sehr schnell eine Vernetzung erfolgen, die durch Gelbildung oder durch Bildung unlöslicher Anteile sichtbar wird.

Aus EP-A 0 680 981 ist ein Verfahren zur Synthese von Polyesterpolyolen bekannt, das darin besteht, dass man ein Polyol, beispielsweise Glycerin, sowie Adipinsäure in Abwesenheit von Katalysatoren und Lösemitteln auf 150-160°C erhitzt. Man erhält Produkte, die sich als Polyesterpolyolkomponenten für Polyurethanhartschäume eignen.

Aus WO 98/17123 ist ein Verfahren zur Herstellung von Polyestern aus Glycerin und Adipinsäure bekannt, die in Kaugummi-Massen eingesetzt werden. Sie werden erhalten durch ein lösemittelfreies Verfahren ohne Einsatz von Katalysatoren. Nach 4 Stunden beginnen sich hierbei Gele zu bilden. Gelartige Polyesterpolyole sind jedoch für zahlreiche Anwendungen wie beispielsweise Druckfarben und Klebstoffe unerwünscht, weil sie zur Klümpchenbildung führen können und die Dispergiereigenschaften mindern.

Eine derartige Gelbildung ist auf eine Vernetzung zurückzuführen, was sich in einer hohen Viskosität ausdrückt.

Die oben erwähnte WO 02/34814 beschreibt die Herstellung von gering verzweigten Polyesterolen für Pulverlacke, indem aromatische Dicarbonsäuren zusammen mit aliphatischen Dicarbonsäuren und Diolen, sowie mit geringen Mengen eines Verzweigungsmittels, zum Beispiel eines Triols oder einer Tricarbonsäure umgesetzt werden.

EP-A 776 920 beschreibt Bindemittel aus Polyacrylaten und Polyestern, wobei letztere als Aufbaukomponente Hexahydrophthalsäure und/oder Methylhexahydrophthalsäure sowie - teilweise optional - Neopentylglykol, Trimethylolpropan, andere Alkandiole, andere Dicarbonsäuren sowie Mono- und/oder Hydroxycarbonsäuren in bestimmten Verhältnissen enthalten können.

Nachteilig an den dort offenbarten Polyestern ist, dass trotz der vergleichsweise geringen Molekulargewichte die Viskositäten in Lösung schon sehr hoch sind.

EP 1 334 989 beschreibt die Herstellung verzweigter, niederviskoser Polyesterole für Lackanwendungen zur Erhöhung des nichtflüchtigen Anteils. Hier werden Mischungen aus Di- und höherfunktionellen Carbonsäuren (Funktionalität der Mischung mindestens 2,1) mit trifunktionellen Alkoholen und aliphatischen verzweigten Monocarbonsäuren umgesetzt. Die beschriebenen Polyester sind als verzweigt anzusehen, jedoch ist als wesentlich hier der Einsatz von verzweigten Monocarbonsäuren zu sehen, die die Viskosität des Systems stark reduzieren, allerdings auch den unreaktiven Anteil des Polyesters erhöhen. Die Zugabe von Monocarbonsäuren erfolgt gemäß der EP 1 334 989 entweder durch gleichzeitige Reaktion von di- oder mehrfunktioneller Säure, tri- oder mehrfunktionellem Alkohol und Monocarbonsäure oder durch zweistufige Umsetzung von zunächst tri- oder mehrfunktionellem Alkohol mit Monocarbonsäure und anschließender Umsetzung des entstehenden Reaktionsproduktes mit di- oder mehrfunktioneller Säure.

Nachteilig an einer solchen Reaktionsführung ist, daß die Monocarbonsäuren in der ersten Variante statistisch im gesamten Polyester verteilt sind und als Kettenabbruchmittel wirken, was zu einem geringen Molekulargewicht und einer breiten Streuung der Molgewichtsverteilung des Produkts führt. In der zweiten Variante wird die Funktionalität der Alkoholkomponente durch die Reaktion mit den Monocarbonsäuren erniedrigt, der lineare Anteil des Polymeren nimmt deutlich zu und die Eigenschaften des Polyesters, zum Beispiel Löslichkeit oder Kristallinität werden beeinflusst.

Definiert aufgebaute, hochfunktionelle Polyester sind erst seit neuerer Zeit bekannt.
So beschreibt die WO 93/17060 (EP 630 389) und die EP 799 279 dendrimere und hyperverzweigte Polyester auf Basis von Dimethylolpropionsäure, die als AB₂-Baustein (A = Säuregruppe, B = OH-Gruppe) intermolekular zu Polyestern kondensiert. Die Synthese ist sehr unflexibel, da man auf AB₂-Bausteine wie Dimethylolpropionsäure als alleinigen Einsatzstoff angewiesen ist. Weiterhin sind Dendrimere für den allgemeinen Gebrauch zu kostspielig, weil bereits die AB₂-Bausteine als Einsatzstoffe in der Regel teuer und die Synthesen mehrstufig sind und hohe Anforderungen an die Reinheit der Zwischen- und Endprodukte gestellt werden.

WO 01/46296 beschreibt die Herstellung dendritischer Polyester in einer Mehrstufensynthese ausgehend von einem Zentralmolekül, wie Trimethylolpropan, Dimethylolpropionsäure als AB₂-Baustein, sowie einer Dicarbonsäure oder einem Glycidylester als Funktionalisierungsagenzien. Diese Synthese ist ebenfalls auf das Vorhandensein des AB₂-Bausteins angewiesen.

WO 03/070843 und WO 03/070844 beschreiben hyperverzweigte Copolyester-polyole auf Basis von AB₂- oder auch AB₃-Bausteinen und einem Kettenverlängerer, die in Coatings-Systemen eingesetzt werden. Beispielsweise werden Dimethylolpropionsäure und Caprolacton als Einsatzstoffe verwendet. Auch hier gilt, dass man von einem AB₂-Baustein abhängig ist.

EP 1109775 beschreibt die Herstellung von hyperverzweigten Polyestern mit einer tetrafunktionellen Zentralgruppe. Hier wird ausgehend von unsymmetrischen Tetrolen, wie beispielsweise Homopentaerythrit, als Zentralmolekül ein Dendrimer-ähnliches Produkt aufgebaut, dass in Lacken Einsatz findet. Derartige unsymmetrische Tetrole sind jedoch teure Spezialchemikalien, die kommerziell nicht in großen Mengen verfügbar sind.

Die EP 1070748 beschreibt die Herstellung hyperverzweigter Polyester und deren Einsatz in Pulverlacken. Die Ester, wieder basierend auf selbst-kondensierbaren Monomeren wie Dimethylolpropionsäure als AB₂-Baustein, werden, gegebenenfalls nach Kettenverlängerung, dem Lacksystem in Mengen von 0,2 - 5 Gew.% als Fließverbesserer zugesetzt.

DE 101 63 163 und DE 10219508 beschreiben die Herstellung von hyperverzweigten Polyestern auf Basis eines A₂ + B₃-Ansatzes. Dieses Prinzip basiert auf dem Einsatz von Dicarbonsäuren und Triolen oder auf Basis von Tricarbonsäuren und Diolen. Die Flexibilität dieser Synthesen ist deutlich höher, da man nicht auf den Einsatz von einem AB₂-Baustein angewiesen ist.

Trotzdem war es wünschenswert, die Flexibilität der Synthese zu hoch- oder hyperverzweigten Polyestern weiter zu erhöhen, speziell bei der Einstellung von Funktionalitäten, Löslichkeitsverhalten und auch Schmelz- oder Glasübergangstemperaturen.

R. A. Gross und Mitarbeiter beschreiben Synthesen von verzweigten Polyestern durch Umsetzung von Dicarbonsäuren mit Glycerin oder Sorbitol und aliphatischen Diolen. Diese Synthesen werden mittels enzymatischer Katalyse durchgeführt und führen zu "weichen" Produkten, die eine Glasübergangstemperatur zwischen -28°C und 7°C aufweisen. Siehe dazu Polym. Prep. 2003, 44(2), 635), Macromolecules 2003, 36, 8219 und Macromolecules 2003, 36, 9804. Die Reaktionen unter Enzymkatalyse weisen in der Regel lange Reaktionszeiten auf, was die Raum-Zeitausbeute der Reaktion deutlich herabsetzt und die Kosten zur Herstellung von Polyestern erhöht. Weiterhin sind mit Enzymen nur bestimmte Monomere, zum Beispiel Adipinsäure, Bernsteinsäure, Glycerin, Sorbitol oder Oktandiol umsetzbar, während Produkte wie Phthalsäuren, Trimethylolpropan oder Cyclohexandiol nur schwer oder gar nicht enzymatisch zur Reaktion zu bringen sind.

Der Einsatz von hoch- oder hyperverzweigten Polyestern in Druckfarben und Drucksystemen wird beschrieben in WO 02/36697 oder WO 03/93002.

Der Erfindung lag die Aufgabe zugrunde, mittels eines technisch einfachen und preiswerten Verfahrens aliphatische oder aromatische, hochfunktionelle und hochverzweigte Polyester bereitzustellen, deren Strukturen, Verzweigungsgrad, Funktionalitäten und Eigenschaften, wie zum Beispiel Löslichkeiten oder Schmelz- oder Glasübergangstemperaturen, sich leicht an die Erfordernisse der Anwendung anpassen lassen und die vorteilhafte Eigenschaften, wie hohe Funktionalität, hohe Reaktivität, geringe Viskosität und/oder gute Löslichkeit, in sich vereinen können.

Die Aufgabe konnte erfindungsgemäß gelöst werden, indem Dicarbonsäuren oder deren Derivate mit einer Mischung aus difunktionellen und höherfunktionellen Alkoholen oder aber difunktionelle Alkohole mit einer Mischung aus di- und höherfunktionellen Carbonsäuren umgesetzt wurden.

Gegenstand der Erfindung sind somit hochfunktionelle, hoch- oder hyperverzweigte Polyester mit einem Molekulargewicht Mₙ von mindestens 500 g/mol und einer Polydispersität M_{w}/Mₙ von 1,2 - 50 erhältlich durch

Umsetzung mindestens einer aliphatischen, cycloaliphatischen, araliphatischen oder aromatischen Dicarbonsäure (A₂) oder von Derivaten derselben und mindestens einem zweiwertigen aliphatischen, cycloaliphatischen, araliphatischen oder aromatischen Alkohol (B₂), welcher 2 OH-Gruppen aufweist,
mit
entweder
a) mindestens einem x-wertigen aliphatischen, cycloaliphatischen, araliphatischen oder aromatischen Alkohol (Cₓ), der mehr als zwei OH-Gruppen aufweist und x eine Zahl größer 2, vorzugsweise zwischen 3 und 8, , besonders bevorzugt zwischen 3 und 6, ganz besonders bevorzugt von 3 bis 4 und insbesondere 3 darstellt,
   oder
b) mindestens einer aliphatischen, cycloaliphatischen, araliphatischen oder aromatischen Carbonsäure (D_{y}) oder deren Derivaten, die mehr als zwei Säuregruppen aufweist und y eine Zahl größer 2, vorzugsweise zwischen 3 und 8, besonders bevorzugt zwischen 3 und 6, ganz besonders bevorzugt von 3 bis 4 und insbesondere 3 darstellt,
   jeweils gegebenenfalls in Gegenwart weiterer funktionalisierter Bausteine E
   und
c) gegebenenfalls anschließend Umsetzung mit einer Monocarbonsäure F
   wobei
   man das Verhältnis der reaktiven Gruppen im Reaktionsgemisch so wählt, dass man ein molares Verhältnis von OH-Gruppen zu Carboxylgruppen oder deren Derivaten von 5:1 bis 1:5, vorzugsweise von 4:1 bis 1:4, besonders bevorzugt von 3:1 bis 1:3 und ganz besonders bevorzugt von 2:1 bis 1:2 einstellt wobei bei Variante a) die Glasübergangstemperatur T_{g} der Polyester von -40°C bis 100°C beträgt; und wobei bei Variante a) der Verzweigungsgrad 10 bis 99,9% beträgt.

Gegenstand der Erfindung sind weiterhin ein Verfahren zur Herstellung solcher hochfunktionellen, hoch- oder hyperverzweigten Polyester.

Unter hyperverzweigten Polyestern werden im Rahmen dieser Erfindung unvernetzte Polyester mit Hydroxyl- und Carboxylgruppen verstanden, die sowohl strukturell als auch molekular uneinheitlich sind. Unvernetzt im Rahmen dieser Schrift bedeutet, daß ein Vernetzungsgrad von weniger als 15 Gew.%, bevorzugt von weniger als 10 Gew.%, bestimmt über den unlöslichen Anteil des Polymeren, vorhanden ist.

Der unlösliche Anteil des Polymeren wurde bestimmt durch vierstündige Extraktion mit dem gleichen Lösungsmittel, wie es für die Gelpermeationschromatographie verwendet wird, also Tetrahydrofuran oder Hexafluorisopropanol, je nachdem, in welchem Lösungsmittel das Polymer besser löslich ist, in einer Soxhlet-Apparatur und nach Trocknung des Rückstandes bis zur Gewichtskonstanz Wägung des verbliebenen Rückstandes.

Hyperverzweigte Polyester können auf der einen Seite ausgehend von einem Zentralmolekül analog zu Dendrimeren, jedoch mit uneinheitlicher Kettenlänge der Äste aufgebaut sein. Sie können auf der anderen Seite auch linear, mit funktionellen Seitengruppen, aufgebaut sein oder aber, als Kombination der beiden Extreme, lineare und verzweigte Molekülteile aufweisen. Zur Definition von dendrimeren und hyperverzweigten Polymeren siehe auch P.J. Flory, J. Am. Chem. Soc. 1952, 74, 2718 und H. Frey et al., Chemistry - A European Journal, 2000, 6, No. 14, 2499.

Unter "hyperverzweigt" wird im Zusammenhang mit der vorliegenden Erfindung verstanden, dass der Verzweigungsgrad (Degree of Branching, DB), dass heißt die mittlere Anzahl dendritischer Verknüpfungen plus mittlere Anzahl der Endgruppen pro Molekül, 10 bis 99,9 %, bevorzugt 20 bis 99 %, besonders bevorzugt 20 - 95 % beträgt.

Unter "dendrimer" wird im Zusammenhang mit der vorliegenden Erfindung verstanden, daß der Verzweigungsgrad 99,9 - 100% beträgt. Zur Definition des "Degree of Branching" siehe H. Frey et al., Acta Polym. 1997, 48, 30 - 35.

Zu der Erfindung ist im Einzelnen das Folgende auszuführen:
Zu den Dicarbonsäuren (A₂) gehören beispielsweise aliphatische Dicarbonsäuren, wie Oxalsäure, Malonsäure, Bernsteinsäure, Glutarsäure, Adipinsäure, Pimelinsäure, Korksäure, Azelainsäure, Sebacinsäure, Undecan-α,ω-dicarbonsäure, Dodecan-α,ω-dicarbonsäure, cis- und trans-Cyclohexan-1,2-dicarbonsäure, cis- und trans-Cyclohexan-1,3-dicarbonsäure, cis- und trans-Cyclohexan-1,4-dicarbonsäure, cis- und trans-Cyclopentan-1,2-dicarbonsäure, cis- und trans-Cyclopentan-1,3-dicarbonsäure. Weiterhin können auch aromatische Dicarbonsäuren, wie zum Beispiel Phthalsäure, Isophthalsäure oder Terephthalsäure verwendet werden. Auch ungesättigte Dicarbonsäuren, wie Maleinsäure oder Fumarsäure sind einsetzbar.

Die genannten Dicarbonsäuren können auch substituiert sein mit einem oder mehreren Resten, ausgewählt aus C₁-C₁₀-Alkylgruppen, beispielsweise Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, 2-Ethylhexyl, Trimethylpentyl, n-Nonyl oder n-Decyl,
C₃-C₁₂-Cycloalkylgruppen, beispielsweise Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl; Alkylengruppen wie Methylen oder Ethyliden oder
C₆-C₁₄-Arylgruppen wie beispielsweise Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl.

Als beispielhafte Vertreter für substituierte Dicarbonsäuren seien genannt: 2-Methylmalonsäure, 2-Ethylmalonsäure, 2-Phenylmalonsäure, 2-Methylbernsteinsäure, 2-Ethylbernsteinsäure, 2-Phenylbernsteinsäure, Itaconsäure, 3,3-Dimethylglutarsäure.

Weiterhin lassen sich Gemische von zwei oder mehreren der vorgenannten Dicarbonsäuren einsetzen.

Die Dicarbonsäuren lassen sich entweder als solche oder in Form von Derivaten einsetzen.

Unter Derivaten werden bevorzugt verstanden
- die betreffenden Anhydride in monomerer oder auch polymerer Form,
- Mono- oder Dialkylester, bevorzugt Mono- oder Di-C₁-C₄-alkylester, besonders bevorzugt Mono- oder Dimethylester oder die entsprechenden Mono- oder Diethylester,
- ferner Mono- und Divinylester sowie
- gemischte Ester, bevorzugt gemischte Ester mit unterschiedlichen C₁-C₄-Alkylkomponenten, besonders bevorzugt gemischte Methylethylester.

C₁-C₄-Alkyl bedeutet im Rahmen dieser Schrift Methyl, Ethyl, *iso*-Propyl, n-Propyl, n-Butyl, *iso*-Butyl, *sek*-Butyl und *tert*-Butyl, bevorzugt Methyl, Ethyl und n-Butyl, besonders bevorzugt Methyl und Ethyl und ganz besonders bevorzugt Methyl.

Im Rahmen der vorliegenden Erfindung ist es auch möglich, ein Gemisch aus einer Dicarbonsäure und einem oder mehreren ihrer Derivate einzusetzen. Gleichfalls ist es im Rahmen der vorliegenden Erfindung möglich, ein Gemisch mehrerer verschiedener Derivate von einer oder mehreren Dicarbonsäuren einzusetzen.

Besonders bevorzugt setzt man Malonsäure, Bernsteinsäure, Glutarsäure, Adipinsäure, 1,2-, 1,3- oder 1,4-Cyclohexandicarbonsäure (Hexahydrophthalsäuren), Phthalsäure, Isophthalsäure, Terephthalsäure oder deren Mono- oder Dialkylester ein.

Umsetzbare Tricarbonsäuren oder Polycarbonsäuren (D_{y}) sind beispielsweise Aconitsäure, 1,3,5-Cyclohexantricarbonsäure, 1,2,4-Benzoltricarbonsäure, 1,3,5-Benzoltricarbonsäure, 1,2,4,5-Benzoltetracarbonsäure (Pyromellitsäure) sowie Mellitsäure und niedermolekulare Polyacrylsäuren.

Tricarbonsäuren oder Polycarbonsäuren (D_{y}) lassen sich in der erfindungsgemäßen Reaktion entweder als solche oder aber in Form von Derivaten einsetzen.

Unter Derivaten werden bevorzugt verstanden
- die betreffenden Anhydride in monomerer oder auch polymerer Form,
- Mono- Di- oder Trialkylester, bevorzugt Mono- Di-, oder Tri-C₁-C₄-alkylester, besonders bevorzugt Mono-, Di- oder Trimethylester oder die entsprechenden Mono-, Di- oder Triethylester,
- ferner Mono-, Di- und Trivinylester sowie gemischte Ester, bevorzugt gemischte Ester mit unterschiedlichen C₁-C₄-Alkylkomponenten, besonders bevorzugt gemischte Methylethylester.

Im Rahmen der vorliegenden Erfindung ist es auch möglich, ein Gemisch aus einer Tri- oder Polycarbonsäure und einem oder mehreren ihrer Derivate einzusetzen, zum Beispiel eine Mischung aus Pyromellitsäure und Pyromellitsäuredianhydrid. Gleichfalls ist es im Rahmen der vorliegenden Erfindung möglich, ein Gemisch mehrerer verschiedener Derivate von einer oder mehreren Tri- oder Polycarbonsäuren einzusetzen, zum Beispiel eine Mischung aus 1,3,5-Cyclohexantricarbonsäure und Pyromellitsäuredianhydrid.

Als Diole (B₂) gemäß der vorliegenden Erfindung verwendet man beispielsweise Ethylenglykol, Propan-1,2-diol, Propan-1,3-diol, Butan-1,2-diol, Butan-1,3-diol, Butan-1,4-diol, Butan-2,3-diol, Pentan-1,2-diol, Pentan-1,3-diol, Pentan-1,4-diol, Pentan-1,5-diol, Pentan-2,3-diol, Pentan-2,4-diol, Hexan-1,2-diol, Hexan-1,3-diol, Hexan-1,4-diol, Hexan-1,5-diol, Hexan-1,6-diol, Hexan-2,5-diol, Heptan-1,2-diol 1,7-Heptandiol, 1,8-Octandiol, 1,2-Octandiol, 1,9-Nonandiol, 1,2-Decandiol, 1,10-Decandiol, 1,2-Dodecandiol, 1,12-Dodecandiol, 1,5-Hexadien-3,4-diol, 1,2- und 1,3-Cyclopentandiole, 1,2-, 1,3- und 1,4-Cyclohexandiole, 1,1-, 1,2-, 1,3- und 1,4-Bis-(Hydroxymethyl)cyclohexane, 1,1-, 1,2-, 1,3- und 1,4-Bis(Hydroxyethyl)cyclohexane, Neopentylglykol, (2)-Methyl-2,4-pentandiol, 2,4-Dimethyl-2,4-Pentandiol, 2-Ethyl-1,3-hexandiol, 2,5-Dimethyl-2,5-hexandiol, 2,2,4-Trimethyl-1,3-pentandiol, Pinacol, Diethylenglykol, Triethylenglykol, Dipropylenglykol, Tripropylenglykol, Polyethylenglykole HO(CH₂CH₂O)ₙ-H oder Polypropylenglykole HO(CH[CH₃]CH₂O)ₙ-H, wobei n eine ganze Zahl und n ≥4 ist, Polyethylen-polypropylenglykole, wobei die Abfolge der Ethylenoxid- der Propylenoxid-Einheiten blockweise oder statistisch sein kann, Polytetramethylenglykole, vorzugsweise bis zu einem Molgewicht bis zu 5000 g/mol, Poly-1,3-Propandiole, vorzugsweise mit einem Molgewicht bis zu 5000 g/mol, Polycaprolactone oder Gemische von zwei oder mehr Vertretern der voranstehenden Verbindungen. Dabei kann eine oder auch beide Hydroxylgruppen in den vorstehend genannten Diolen durch SH-Gruppen substituiert werden. Bevorzugt eingesetzte Diols sind Ethylenglykol, 1,2-Propandiol, 1,3-Propandiol, 1,4-Butandiol, 1,5-Pentandiol, 1,6-Hexandiol, 1,8-Octandiol, 1,2-, 1,3- und 1,4-Cyclohexandiol, 1,3- und 1,4-Bis(hydroxymethyl)cyclohexan, sowie Diethylenglykol, Triethylenglykol, Dipropylenglykol und Tripropylenglykol.

Die zweiwertigen Alkohole B₂ können optional noch weitere Funktionalitäten wie beispielsweise Carbonyl, Carboxy, Alkoxycarbonyl oder Sulfonyl enthalten, wie beispielsweise Dimethylolpropionsäure oder Dimethylolbuttersäure, sowie deren C₁-C₄-Alkylester, bevorzugt weisen die Alkohole B₂ jedoch keine weiteren Funktionalitäten auf.

Mindestens trifunktionelle Alkohole (Cₓ) umfassen Glycerin, Trimethylolmethan, Trimethylolethan, Trimethylolpropan, 1,2,4-Butantriol, Tris(hydroxymethyl)amin, Tris(hydroxyethyl)amin, Tris(hydroxypropyl)amin, Pentaerythrit, Diglycerin, Triglycerin oder höhere Kondensationsprodukte des Glycerins, Di(trimethylolpropan), Di(pentaerythrit), Trishydroxymethylisocyanurat, Tris(hydroxyethyl)isocyanurat (THEIC), Tris(hydroxypropyl)isocyanurat, Inositole oder Zucker, wie zum Beispiel Glucose, Fructose oder Sucrose, Zuckeralkohole wie z.B. Sorbit, Mannit, Threit, Erythrit, Adonit (Ribit), Arabit (Lyxit), Xylit, Dulcit (Galactit), Maltit, Isomalt, tri- oder höherfunktionelle Polyetherole auf Basis tri- oder höherfunktioneller Alkohole und Ethylenoxid, Propylenoxid und/oder Butylenoxid.

Dabei sind Glycerin, Diglycerin, Triglycerin, Trimethylolethan, Trimethylolpropan, 1,2,4-Butantriol, Pentaerythrit, Tris(hydroxyethyl)isocyanurat sowie deren Polyetherole auf Basis von Ethylenoxid und/oder Propylenoxid besonders bevorzugt.

Das erfindungsgemäße Verfahren kann in Substanz oder in Gegenwart eines Lösemittels durchgeführt werden. Als Lösemittel geeignet sind beispielsweise Kohlenwasserstoffe wie Paraffine oder Aromaten. Besonders geeignete Paraffine sind n-Heptan und Cyclohexan. Besonders geeignete Aromaten sind Toluol, ortho-Xylol, meta-Xylol, para-Xylol, Xylol als Isomerengemisch, Ethylbenzol, Chlorbenzol und ortho- und meta-Dichlorbenzol. Weiterhin sind als Lösemittel in Abwesenheit von sauren Katalysatoren ganz besonders Ether geeignet, wie beispielsweise Dioxan oder Tetrahydrofuran und Ketone wie beispielsweise Methylethylketon und Methylisobutylketon.

Die Menge an zugesetztem Lösemittel beträgt erfindungsgemäß mindestens 0,1 Gew.-%, bezogen auf die Masse der eingesetzten umzusetzenden Ausgangsmaterialien, bevorzugt mindestens 1 Gew.-% und besonders bevorzugt mindestens 10 Gew.-%. Man kann auch Überschüsse an Lösemittel, bezogen auf die Masse an eingesetzten umzusetzenden Ausgangsmaterialien, einsetzen, beispielsweise das 1,01 bis 10-fache. Lösemittel-Mengen von mehr als dem 100-fachen, bezogen auf die Masse an eingesetzten umzusetzenden Ausgangsmaterialien, sind nicht vorteilhaft, weil bei deutlich niedrigeren Konzentrationen der Reaktionspartner die Reaktionsgeschwindigkeit deutlich nachlässt, was zu unwirtschaftlichen langen Umsetzungsdauern führt.

In einer bevorzugten Ausführungsform wird die Reaktion frei von Lösungsmittel durchgeführt.

Zur Durchführung des erfindungsgemäßen Verfahrens kann man in Gegenwart eines Wasser entziehenden Mittels als Additiv arbeiten, das man zu Beginn der Reaktion zusetzt. Geeignet sind beispielsweise Molekularsiebe, insbesondere Molekularsieb 4Å, MgSO₄ und Na₂SO₄. Man kann auch während der Reaktion weiteres Wasser entziehendes Mittel zufügen oder Wasser entziehendes Mittel durch frisches Wasser entziehendes Mittel ersetzen. Man kann auch während der Reaktion gebildetes Wasser bzw. Alkohol abdestillieren und beispielsweise einen Wasserabscheider einsetzen, bei dem das Wasser mit Hilfe eines Schleppmittels entfernt wird.

Weiterhin kann die Abtrennung durch Strippen erfolgen, beispielsweise durch Durchleiten eines unter den Reaktionsbedingungen inerten Gases durch das Reaktionsgemisch erfolgen, gegebenenfalls zusätzlich zu einer Destillation. Als Inertgase eignen sich vorzugsweise Stickstoff, Edelgase, Kohlendioxid oder Verbrennungsgase.

Man kann das erfindungsgemäße Verfahren in Abwesenheit von Katalysatoren durchführen. Vorzugsweise arbeitet man jedoch in Gegenwart von mindestens einem Katalysator. Die sind bevorzugt saure anorganische, metallorganische oder organische Katalysatoren oder Gemische aus mehreren sauren anorganischen, metallorganischen oder organischen Katalysatoren.

Als saure anorganische Katalysatoren im Sinne der vorliegenden Erfindung sind beispielsweise Schwefelsäure, Sulfate und Hydrogensyulfate, wie Natriumhydrogensulfat, Phosphorsäure, Phosphonsäure, hypophosphorige Säure, Aluminiumsulfathydrat, Alaun, saures Kieselgel (pH ≤6, insbesondere ≤5) und saures Aluminiumoxid zu nennen. Weiterhin sind beispielsweise Alumiumverbindungen der allgemeinen Formel Al(OR¹)₃ und Titanate der allgemeinen Formel Ti(OR¹)₄ als saure anorganische Katalysatoren einsetzbar, wobei die Reste R¹ jeweils gleich oder verschieden sein können und unabhängig voneinander gewählt sind aus

C₁-C₂₀-Alkylresten, beispielsweise Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, 2-Ethylhexyl, n-Nonyl, n-Decyl, n-Dodecyl, n-Hexadecyl oder n-Octadecyl.

C₃-C₁₂-Cycloalkylresten, beispielsweise Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl.

Bevorzugt sind die Reste R¹ in Al(OR¹)₃ bzw. Ti(OR¹)₄ jeweils gleich und gewählt aus n-Butyl, Isopropyl oder 2-Ethylhexyl.

Bevorzugte saure metallorganische Katalysatoren sind beispielsweise gewählt aus Dialkylzinnoxiden R¹₂SnO oder Dialkylzinnestern R¹₂Sn(OR²)₂ wobei R¹ wie oben stehend definiert ist und gleich oder verschieden sein kann.

R² kann die gleichen Bedeutungen haben wie R¹ und zusätzlich C₆-C₁₂-Aryl sein, beispielsweise Phenyl, o-, m- oder p-Tolyl, Xylyl oder Naphthyl. R² kann jeweils gleich oder verschieden sein.

Beispiele sind für zinnorganische Katalysatoren sind Zinn(II)-n-octanoat, Zinn-(II)-2-ethylhexanoat, Zinn-(II)-laurat, Dibutylzinnoxid, Diphenylzinnoxid, Dibutylzinndichlorid, Dibutylzinndiacetat, Dibutylzinndilaurat, Dibutylzinndimaleat oder Dioctylzinndiacetat.

Besonders bevorzugte Vertreter für saure metallorganische Katalysatoren sind Dibutylzinnoxid, Diphenylzinnoxid und Dibutylzinndilaurat.

Bevorzugte saure organische Katalysatoren sind saure organische Verbindungen mit beispielsweise Phosphatgruppen, Sulfonsäuregruppen, Sulfatgruppen oder Phosphonsäuregruppen. Besonders bevorzugt sind Sulfonsäuren wie beispielsweise para-Toluolsulfonsäure. Man kann auch saure Ionentauscher als saure organische Katalysatoren einsetzen, beispielsweise Sulfonsäuregruppen-haltige Polystyrolharze, die mit etwa 2 mol-% Divinylbenzol vernetzt sind.

Man kann auch Kombinationen von zwei oder mehreren der vorgenannten Katalysatoren einsetzen. Auch ist es möglich, solche organische oder metallorganische oder auch anorganische Katalysatoren, die in Form diskreter Moleküle vorliegen, in immobilisierter Form, zum Beispiel an Kieselgel oder an Zeolithen, einzusetzen.

Wünscht man saure anorganische, metallorganische oder organische Katalysatoren einzusetzen, so setzt man erfindungsgemäß 0,1 bis 10 Gew.-%, bevorzugt 0,2 bis 2 Gew.-% Katalysator ein.

Enzyme oder Zersetzungsprodukte von Enzymen gehören nicht zu den sauren organischen Katalysatoren im Sinne der vorliegenden Erfindung. Gleichfalls gehören die erfindungsgemäß umgesetzten Dicarbonsäuren nicht zu den sauren organischen Katalysatoren im Sinne der vorliegenden Erfindung.

Zur Durchführung des erfindungsgemäßen Verfahren verzichtet man vorteilhaft auf den Einsatz von Enzymen.

Das erfindungsgemäße Verfahren wird vorzugsweise unter Inertgasatmosphäre, d.h. einem unter den Reaktionsbedingungen inerten Gas, durchgeführt, beispielsweise unter Kohlendioxid, Verbrennungsgasen, Stickstoff oder Edelgas, unter denen insbesondere Argon zu nennen ist.

Das erfindungsgemäße Verfahren wird bei Temperaturen von 60 bis 250°C durchgeführt. Vorzugsweise arbeitet man bei Temperaturen von 80 bis 200, besonders bevorzugt bei 100 bis 180°C.

Die Druckbedingungen des erfindungsgemäßen Verfahrens sind in der Regel unkritisch. Man kann bei deutlich verringertem Druck arbeiten, beispielsweise bei 10 bis 500 mbar. Das erfindungsgemäße Verfahren kann auch bei Drucken oberhalb von 500 mbar durchgeführt werden. Bevorzugt ist aus Gründen der Einfachheit die Umsetzung bei Atmosphärendruck; möglich ist aber auch eine Durchführung bei leicht erhöhtem Druck, beispielsweise bis 1200 mbar. Man kann auch unter deutlich erhöhtem Druck arbeiten, beispielsweise bei Drucken bis 10 bar. Bevorzugt ist die Umsetzung bei verringertem oder Atmosphärendruck, besonders bevorzugt bei Atmosphärendruck.

Die Umsetzungsdauer des erfindungsgemäßen Verfahrens beträgt üblicherweise 10 Minuten bis 48 Stunden, bevorzugt 30 Minuten bis 24 Stunden und besonders bevorzugt 1 bis 12 Stunden.

Nach beendeter Reaktion lassen sich die hochfunktionellen hoch- und hyperverzweigten Polyester leicht isolieren, beispielsweise durch Abfiltrieren des Katalysators und gegebenenfalls Abziehen des Lösemittels, wobei man das Abziehen des Lösemittels üblicherweise bei vermindertem Druck durchführt. Weitere gut geeignete Aufarbeitungsmethoden sind Ausfällen des Polymeren nach Zugabe von Wasser und anschließendes Waschen und Trocknen.
d) Falls erforderlich kann das Reaktionsgemisch einer Entfärbung, beispielsweise durch Behandlung mit Aktivkohle oder Metalloxiden, wie z.B. Aluminiumoxid, Siliciumoxid, Magnesiumoxid, Zirkonoxid, Boroxid oder Gemischen davon, in Mengen von beispielsweise 0,1 - 50 Gew%, bevorzugt 0,5 bis 25 Gew%, besonders bevorzugt 1 - 10 Gew% bei Temperaturen von beispielsweise 10 bis 200°C, bevorzugt 20 bis 180 °C und besonders bevorzugt 30 bis 160 °C unterworfen werden.

Dies kann durch Zugabe des pulver- oder granulatförmigen Entfärbungsmittels zum Reaktionsgemisch und nachfolgender Filtration oder durch Überleiten des Reaktionsgemisches über eine Schüttung des Entfärbungsmittels in Form beliebiger, geeigneter Formkörper erfolgen.

Die Entfärbung des Reaktionsgemisches kann an beliebiger Stelle des Aufarbeitungsverfahrens erfolgen, beispielsweise auf der Stufe des rohen Reaktionsgemisches oder nach gegebenenfalls erfolgter Vorwäsche, Neutralisation, Wäsche oder Lösungsmittelentfernung.

Das Reaktionsgemisch kann weiterhin einer Vorwäsche e) und/oder einer Neutralisation f) und/oder einer Nachwäsche g) unterworfen werden, bevorzugt lediglich einer Neutralisation f). Gegebenenfalls können Neutralisation f) und Vorwäsche e) in der Reihenfolge auch vertauscht werden.

Aus der wäßrigen Phase der Wäschen und/oder Neutralisation können enthaltene Wertprodukte durch Ansäuern und Extraktion mit einem Lösungsmittel zumindest teilweise wiedergewonnen und von Neuem eingesetzt werden.

Zur Vor- oder Nachwäsche wird das Reaktionsgemisch in einem Waschapparat mit einer Waschflüssigkeit, beispielsweise Wasser oder einer 5 - 30 Gew%-igen, bevorzugt 5 - 20, besonders bevorzugt 5 - 15 Gew%-igen Kochsalz-, Kaliumchlorid-, Ammoniumchlorid-, Natriumsulfat- oder Ammoniumsulfatlösung, bevorzugt Wasser oder Kochsalzlösung, behandelt.

Das Mengenverhältnis Reaktionsgemisch : Waschflüssigkeit beträgt in der Regel 1: 0,1 - 1, bevorzugt 1 : 0,2 - 0,8, besonders bevorzugt 1 : 0,3 - 0,7.

Die Wäsche oder Neutralisation kann beispielsweise in einem Rührbehälter oder in anderen herkömmlichen Apparaturen, z.B. in einer Kolonne oder Mixer-Settler-Apparatur, durchgeführt werden.

Verfahrenstechnisch können für eine Wäsche oder Neutralisation im erfindungsgemäßen Verfahren alle an sich bekannten Extraktions- und Waschverfahren und -apparate eingesetzt werden, z.B. solche, die in Ullmann's Encyclopedia of Industrial Chemistry, 6th ed, 1999 Electronic Release, Kapitel: Liquid - Liquid Extraction - Apparatus, beschrieben sind. Beispielsweise können dies ein- oder mehrstufige, bevorzugt einstufige Extraktionen, sowie solche in Gleich- oder Gegenstromfahrweise, bevorzugt Gegenstromfahrweise sein.

Vorzugsweise werden Siebboden- oder gepackte beziehungsweise Füllkörperkolonnen, Rührbehälter oder Mixer-Settler-Apparate, sowie gepulste Kolonnen oder solche mit rotierenden Einbauten eingesetzt.

Die Vorwäsche wird bevorzugt dann eingesetzt, wenn Metallsalze, bevorzugt zinnorganische Verbindungen als Katalysator (mit)verwendet werden.

Eine Nachwäsche kann zur Entfernung von Base- oder Salzspuren aus dem neutralisierten Reaktionsgemisch vorteilhaft sein.

Zur Neutralisation f) kann das gegebenenfalls vorgewaschene Reaktionsgemisch, das noch geringe Mengen an Katalysator und/oder Carbonsäure enthalten kann, mit einer 5 - 25, bevorzugt 5 - 20, besonders bevorzugt 5 - 15 Gew%igen wäßrigen Lösung einer Base, wie beispielsweise Alkali- oder Erdalkalimetalloxide, -hydroxide, -carbonate oder -hydrogencarbonate, bevorzugt Natronlauge, Kalilauge, Natriumhydrogencarbonat, Natriumcarbonat, Kaliumhydrogencarbonat, Kalziumhydroxid, Kalkmilch, Ammoniak, Ammoniakwasser oder Kaliumcarbonat, der gegebenenfalls 5 - 15 Gew% Kochsalz, Kaliumchlorid, Ammoniumchlorid oder Ammoniumsulfat zugesetzt sein können, besonders bevorzugt mit Natronlauge oder Natronlauge-Kochsalz-Lösung, neutralisiert werden. Der Neutralisationsgrad beträgt bevorzugt 5 bis 60 Mol%, vorzugsweise 10 bis 40 Mol%, besonders bevorzugt 20 bis 30 Mol%, bezogen auf die Säuregruppen enthaltenden Monomere.

Die Zugabe der Base erfolgt in einer Weise, daß die Temperatur im Apparat nicht über 60 °C ansteigt, bevorzugt zwischen 20 und 35 °C beträgt und der pH-Wert 4 - 13 beträgt. Die Abfuhr der Neutralisationswärme erfolgt vorzugsweise durch Kühlung des Behälters mit Hilfe von innenliegenden Kühlschlangen oder über eine Doppelwandkühlung.

Das Mengenverhältnis Reaktionsgemisch : Neutralisationsflüssigkeit beträgt in der Regel 1: 0,1 - 1, bevorzugt 1 : 0,2 - 0,8, besonders bevorzugt 1 : 0,3 - 0,7.

Hinsichtlich der Apparatur gilt das oben Gesagte.
h) Falls ein Lösungsmittel im Reaktionsgemisch enthalten ist, so kann dieses durch Destillation im wesentlichen entfernt werden. Bevorzugt wird gegebenenfalls enthaltenes Lösungsmittel nach Wäsche und/oder Neutralisation aus dem Reaktionsgemisch entfernt, falls gewünscht kann dieses aber auch vor der Wäsche beziehungsweise Neutralisation erfolgen.

Dazu kann das Reaktionsgemisch mit einer derartigen Menge an Lagerstabilisator versetzt werden, daß nach Abtrennung des Lösungsmittels 100 - 500, bevorzugt 200 - 500 und besonders bevorzugt 200 - 400 ppm davon im Zielester (Rückstand) enthalten sind.

Die destillative Abtrennung der Hauptmenge an gegebenenfalls verwendetem Lösungsmittel oder niedrigsiedenden Nebenprodukten erfolgt beispielsweise in einem Rührkessel mit Doppelwandheizung und/oder innenliegenden Heizschlangen unter vermindertem Druck, beispielsweise bei 20 - 700 mbar, bevorzugt 30 bis 500 und besonders bevorzugt 50 - 150 mbar und einer Temperatur von 40 - 120 °C.

Selbstverständlich kann die Destillation auch in einem Fallfilm- oder Dünnschichtverdampfer erfolgen. Dazu wird das Reaktionsgemisch, bevorzugt mehrmals im Kreislauf, unter vermindertem Druck, beispielsweise bei 20 - 700 mbar, bevorzugt 30 bis 500 und besonders bevorzugt 50 - 150 mbar und einer Temperatur von 40 - 80 °C durch den Apparat geführt.

Vorteilhaft kann ein unter den Reaktionsbedingungen inertes Gas in den Destillationsapparat eingeleitet werden, beispielsweise 0,1 -1, bevorzugt 0,2 - 0,8 und besonders bevorzugt 0,3 - 0,7 m³ sauerstoffhaltiges Gas pro m³ Reaktionsgemisch und Stunde.

Der Restlösungsmittelgehalt im Rückstand beträgt nach der Destillation in der Regel unter 5 Gew%, bevorzugt 0,5 - 5 % und besonders bevorzugt 1 bis 3 Gew%.

Das abgetrennte Lösungsmittel wird kondensiert und bevorzugt wiederverwendet.

Falls erforderlich kann zusätzlich oder anstelle der Destillation eine Lösungsmittelstrippung i) durchgeführt werden.

Dazu wird das Produkt, das noch geringe Lösungsmittelmengen oder niedrigsiedende Verunreinigungen enthalten kann, auf 50 - 150 °C, bevorzugt 80 - 150 °C erwärmt und die restlichen Lösungsmittelmengen mit einem geeigneten Gas in einer geeigneten Apparatur entfernt. Zur Unterstützung kann gegebenenfalls auch ein Vakuum angelegt werden.

Geeignete Apparaturen sind beispielsweise Kolonnen von an sich bekannter Bauart, die die üblichen Einbauten, z.B. Böden, Schüttungen oder gerichtete Packungen, bevorzugt Schüttungen aufweisen. Als Kolonneneinbauten kommen prinzipiell alle gängigen Einbauten in Betracht, beispielsweise Böden, Packungen und/oder Füllkörper. Von den Böden sind Glockenböden, Siebböden, Ventilböden, Thormannböden und/oder Dual-Flow-Böden bevorzugt, von den Schüttungen sind solche mit Ringen, Wendeln, Sattelkörpern, Raschig-, Intos- oder Pall-Ringen, Barrel- oder Intalox-Sätteln, Top-Pak etc. oder Geflechten, bevorzugt.

Denkbar ist hier auch ein Fallfilm-, Dünnfilm- oder Wischfilmverdampfer, wie z.B. ein Luwa-, Rotafilm- oder Sambayverdampfer, der als Spritzschutz beispielsweise mit einem Demister ausgerüstet sein kann.

Geeignete Gase sind unter den Strippbedingungen inerte Gase insbesondere solche, die auf 50 bis 100 °C temperiert sind.

Die Strippgasmenge beträgt beispielsweise 5 - 20, besonders bevorzugt 10 - 20 und ganz besonders bevorzugt 10 bis 15 m³ Strippgas pro m³ Reaktionsgemisch und Stunde.

Falls notwendig kann das Veresterungsgemisch in einem beliebigen Stadium des Aufarbeitungsverfahrens, bevorzugt nach Wäsche/Neutralisation und gegebenenfalls erfolgter Lösungsmittelentfernung einer Filtration j) unterworfen werden, um ausgefallene Spuren an Salzen sowie gegebenenfalls enthaltenem Entfärbungsmittel zu entfernen.

Auf eine Vor- oder Nachwäsche e) oder g) wird bevorzugt verzichtet, lediglich ein Filtrationsschritt j) kann sinnvoll sein. Ebenfalls wird auf eine Neutralisation f) bevorzugt verzichtet.

Die Abfolge der Schritte e)/g), sowie h) und j) ist dabei beliebig.

Ein weiterer Gegenstand der vorliegenden Erfindung sind die nach dem erfindungsgemäßen Verfahren erhältlichen hochfunktionellen, hoch- oder hyperverzweigten Polyester. Sie zeichnen sich durch besonders geringe Anteile an Verfärbungen und Verharzungen aus.

Die erfindungsgemäßen Polyester haben ein Molekulargewicht Mₙ von mindestens 500, bevorzugt mindestens 600 und besonders bevorzugt 750 g/mol. Die obere Grenze des Molekulargewichts Mₙ ist bevorzugt 100.000 g/mol, besonders bevorzugt beträgt es nicht mehr als 80.000 und ganz besonders bevorzugt nicht mehr als 30.000 g/mol.

Die Angaben zur Polydispersität sowie zum zahlenmittleren und gewichtsmittleren Molekulargewicht Mₙ und M_{w} beziehen sich hier auf gelpermeationschromatographische Messungen, wobei Polymethylmethacrylat als Standard und Tetrahydrofuran oder Hexafluorisopropanol als Elutionsmittel verwendet wurden. Die Methode ist im Analytiker Taschenbuch Bd. 4, Seiten 433 bis 442 , Berlin 1984 beschrieben.

Die Polydispersität der erfindungsgemäßen Polyester beträgt 1,2 bis 50, bevorzugt 1,4 bis 40, besonders bevorzugt 1,5 bis 30 und ganz besonders bevorzugt bis 10.

Die erfindungsgemäßen Polyester sind üblicherweise sehr gut löslich, d.h. man kann bei 25 °C klare Lösungen mit einem Gehalt bis zu 50 Gew.-%, in einigen Fällen sogar bis zu 80 Gew.-%, der erfindungsgemäßen Polyester in Tetrahydrofuran (THF), Ethylacetat, n-Butylacetat, Ethanol und zahlreichen anderen Lösemitteln darstellen, ohne dass mit bloßem Auge Gelpartikel detektierbar sind. Dies zeigt den geringen Vernetzungsgrad der erfindungsgemäßen Polyester.

Die erfindungsgemäßen hochfunktionellen hoch- und hyperverzweigten Polyester sind carboxyterminiert, carboxy- und Hydroxylgruppen-terminiert und vorzugsweise Hydroxylgruppen-terminiert und können zur Herstellung z.B. von Klebstoffen, Druckfarben, Beschichtungen, Schaumstoffen, Überzügen und Lacken vorteilhaft eingesetzt werden.

Ein weiterer Aspekt der vorliegenden Erfindung ist die Verwendung der erfindungsgemäßen hochfunktionellen, hoch- und hyperverzweigten Polyestern zur Herstellung von Polyadditions- oder Polykondensationsprodukten, beispielsweise Polycarbonaten, Polyurethanen, Polyestern und Polyethern. Bevorzugt ist die Verwendung der erfindungsgemäßen Hydroxylgruppen-terminierten hochfunktionellen, hoch- und hyperverzweigten Polyester zur Herstellung von Polycarbonaten, Polyestern oder Polyurethanen.

Ein weiterer Aspekt der vorliegenden Erfindung ist die Verwendung der erfindungsgemäßen hochfunktionellen hoch- und hyperverzweigten Polyester sowie der aus hochfunktionellen, hoch- und hyperverzweigten Polyestern hergestellten Polyadditions- oder Polykondensationsprodukte als Komponente von Druckfarben, Klebstoffen, Beschichtungen, Schaumstoffen, Überzügen und Lacken.

Ein weiterer Aspekt der vorliegenden Erfindung sind Druckfarben, Klebstoffe, Beschichtungen, Schaumstoffe, Überzüge und Lacke, enthaltend mindestens einen erfindungsgemäßen hochfunktionellen hoch- und hyperverzweigten Polyester oder aus den erfindungsgemäßen hochfunktionellen, hoch- und hyperverzweigten Polyestern hergestellte Polyadditions- oder Polykondensationsprodukte, die sich durch hervorragende anwendungstechnische Eigenschaften auszeichnen.

Ein weiterer bevorzugter Aspekt der vorliegenden Erfindung sind Druckfarben, insbesondere Verpackungsdruckfarben für den Flexo- und/oder Tiefdruck, die mindestens ein Lösemittel oder ein Gemisch verschiedener Lösemittel, mindestens ein Farbmittel, mindestens ein polymeres Bindemittel sowie optional weitere Zusatzstoffe umfasst,
wobei es sich bei mindestens einem der polymeren Bindemittel um einen erfindungsgemäßen hoch- und hyperverzweigten hochfunktionellen Polyester handelt.

Die erfindungsgemäßen hoch- und hyperverzweigten Polyester können im Rahmen der vorliegenden Erfindung auch im Gemisch mit anderen Bindemitteln eingesetzt werden. Beispiele für weitere Bindemittel für die erfindungsgemäße Druckfarben umfassen Polyvinylbutyral, Nitrocellulose, Polyamide, Polyurethane, Polyacrylate oder Polyacrylat-Copolymere. Besonders vorteilhaft hat sich die Kombination der hoch- und hyperverzweigten Polyester mit Nitrocellulose erwiesen. Die Gesamtmenge aller Bindemittel in der erfindungsgemäßen Druckfarbe beträgt üblicherweise 5 - 35 Gew.-%, bevorzugt 6 - 30 Gew.-% und besonders bevorzugt 10 - 25 Gew.-% bezogen auf die Summe aller Bestandteile. Das Verhältnis von hoch- und hyperverzweigtem Polyester zu der Gesamtmenge aller Bindemittel liegt üblicherweise im Bereich von 30 Gew.-% bis 100 Gew.-%, bevorzugt mindestens 40 Gew.-%, wobei aber die Menge an hoch- und hyperverzweigtem Polyester im Regelfalle 3 Gew. %, bevorzugt 4 Gew. % und besonders bevorzugt 5 Gew. % bezüglich der Summe aller Bestandteile der Druckfarbe nicht unterschreiten sollte.

Es kann ein einzelnes Lösemittel oder auch ein Gemisch mehrerer Lösemittel eingesetzt werden. Als Lösemittel prinzipiell geeignet sind die üblichen Lösemittel für Druckfarben, insbesondere Verpackungsdruckfarben. Insbesondere geeignet als Lösemittel für die erfindungsgemäße Druckfarbe sind Alkohole wie beispielsweise Ethanol, 1-Propanol, 2-Propanol, Ethylenglykol, Propylenglykol, Diethylenglykol, substituierte Alkohole wie beispielsweise Ethoxypropanol, Ester wie beispielsweise Ethylacetat, Isopropylacetat, n-Propyl oder n-Butylacetat. Als Lösungsmittel ist weiterhin Wasser prinzipiell geeignet. Besonders bevorzugt als Lösemittel sind Ethanol bzw. Gemische, die zu einem überwiegenden Teil aus Ethanol bestehen, und Ethylacetat. Unter den prinzipiell möglichen Lösemitteln trifft der Fachmann je nach den Löslichkeitseigenschaften des Polyesters und der gewünschten Eigenschaften der Druckfarbe eine geeignete Auswahl. Es werden üblicherweise 40 bis 80 Gew. % Lösemittel bezüglich der Summe aller Bestandteile der Druckfarbe eingesetzt.

Als Farbmittel können die üblichen Farbstoffe, insbesondere übliche Pigmente eingesetzt werden. Beispiele sind anorganische Pigmente wie beispielsweise Titandioxid-Pigmente oder Eisenoxidpigmente, Interferenzpigmente, Ruße, Metallpulver wie insbesondere Aluminium, Messing oder Kupferpulver, sowie organische Pigmente wie Azo-, Phthalocyanin- oder Isoindolin-Pigmente. Es können selbstverständlich auch Gemische verschiedener Farbstoffe oder Farbmittel eingesetzt werden sowie außerdem lösliche organische Farbstoffe. Es werden üblicherweise 5 bis 25 Gew.% Farbmittel bezüglich der Summe aller Bestandteile eingesetzt.

Die erfindungsgemäße Verpackungsdruckfarbe kann optional weitere Additive und Hilfsstoffe umfassen. Beispiele für Additive und Hilfsstoffe sind Füllstoffe wie Calciumcarbonat, Aluminiumoxidhydrat oder Aluminium- bzw. Magnesiumsilikat. Wachse erhöhen die Abriebfestigkeit und dienen der Erhöhung der Gleitfähigkeit. Beispiele sind insbesondere Polyethylenwachse, oxidierte Polyethylenwachse, Petroleumwachse oder Ceresinwachse. Fettsäureamide können zur Erhöhung der Oberflächenglätte eingesetzt werden. Weichmacher dienen der Erhöhung der Elastizität des getrockneten Films. Beispiele sind Phthalsäureester wie Dibutylphthalat, Diisobutylphthalat, Dioctylphthalat, Citronensäureester oder Ester der Adipinsäure. Zum Dispergieren der Pigmente können Dispergierhilfsmittel eingesetzt werden. Bei der erfindungsgemäßen Druckfarbe kann vorteilhaft auf Haftvermittler verzichtet werden, ohne dass die Verwendung von Haftvermittlern damit ausgeschlossen sein soll. Die Gesamtmenge aller Additive und Hilfsstoffe übersteigt üblicherweise nicht 20 Gew. % bezüglich der Summe aller Bestandteile der Druckfarbe und beträgt bevorzugt 0 - 10 Gew. %.

Die Herstellung der erfindungsgemäßen Verpackungsdruckfarbe kann in prinzipiell bekannter Art und Weise durch intensives Vermischen bzw. Dispergieren der Bestandteile in üblichen Apparaturen wie beispielsweise Dissolvern, Rührwerkskugelmühlen oder einem Dreiwalzenstuhl erfolgen. Vorteilhaft wird zunächst eine konzentrierte Pigmentdispersion mit einem Teil der Komponenten und einem Teil des Lösemittels hergestellt, die später mit weiteren Bestandteilen und weiterem Lösemittel zur fertigen Druckfarbe weiter verarbeitet wird.

Ein weiterer bevorzugter Aspekt der vorliegenden Erfindung sind Drucklacke, die mindestens ein Lösemittel oder ein Gemisch verschiedener Lösemittel, mindestens ein polymeres Bindemittel sowie optional weitere Zusatzstoffe umfassen, wobei es sich bei mindestens einem der polymeren Bindemittel um einen erfindungsgemäßen hoch- und hyperverzweigten hochfunktionellen Polyester handelt, sowie die Verwendung der erfindungsgemäßen Drucklacke zum Grundieren, als Schutzlack sowie zum Herstellen von Mehrschichtmaterialien.

Die erfindungsgemäßen Drucklacke enthalten naturgemäß keine Farbmittel, weisen aber abgesehen davon die gleichen Bestandteile auf wie die bereits geschilderten erfindungsgemäßen Druckfarben. Die Mengen der übrigen Komponenten erhöhen sich dementsprechend.

Überraschenderweise werden durch die Verwendung von Druckfarben, insbesondere Verpackungsdruckfarben, und Drucklacken mit Bindemitteln auf Basis von hoch- und hyperverzweigten Polyestern, Mehrschichtmaterialien mit hervorragender Haftung zwischen den einzelnen Schichten erhalten. Der Zusatz von Haftvermittlern ist nicht mehr erforderlich. Dabei ist es ganz besonders überraschend, dass ohne Haftvermittler sogar bessere Ergebnisse erzielt werden können, als wenn Haftvermittler zugesetzt werden. Insbesondere auf polaren Folien konnte die Haftung deutlich verbessert werden.

Die erfindungsgemäßen Polyester können als Bindemittelkomponente, beispielsweise in Beschichtungsmassen, gegebenenfalls gemeinsam mit anderen Hydroxy- oder Aminogruppen aufweisenden Bindemitteln, zum Beispiel mit Hydroxy(meth)acrylaten, Hydroxystyryl(meth)acrylaten, linearen oder verzweigten Polyestern, Polyethern, Polycarbonaten, Melaminharzen oder Harnstoff-Formaldehydharzen, zusammen mit gegenüber Carboxy- und/oder Hydroxyfunktionen reaktiven Verbindungen eingesetzt werden, beispielsweise mit Isocyanaten, verkappten Isocyanaten, Epoxiden, Carbonaten und/oder Aminoplasten, bevorzugt Isocyanaten, Epoxiden oder Aminoplasten, besonders bevorzugt mit Isocyanaten oder Epoxiden und ganz besonders bevorzugt mit Isocyanaten.

Isocyanate sind beispielsweise aliphatische, aromatische und cycloaliphatische Di- und Polyisocyanate mit einer mittleren NCO-Funktionalität von mindestens 1,8, bevorzugt 1,8 bis 5 und besonders bevorzugt 2 bis 4, sowie deren Isocyanurate, Oxadiazintrione, Iminooxadiazindione, Harnstoffe, Biurete, Amide, Urethane, Allophanate, Carbodiimide, Uretonimine und Uretdione.

Bei den Diisocyanaten handelt es sich bevorzugt um Isocyanate mit 4 bis 20 C-Atomen. Beispiele für übliche Diisocyanate sind aliphatische Diisocyanate wie Tetramethylendiisocyanat, Hexamethylendiisocyanat (1,6-Diisocyanatohexan), Octamethylendiisocyanat, Decamethylendiisocyanat, Dodecamethylendiisocyanat, Tetradecamethylendiisocyanat, Derivate des Lysindiisocyanates, Trimethylhexandiisocyanat oder Tetramethylhexandiisocyanat, cycloaliphatische Diisocyanate wie 1,4-, 1,3- oder 1,2-Diisocyanatocyclohexan, 4,4'- oder 2,4'-Di(isocyanatocyclohexyl)methan, 1-Isocyanato-3,3,5- trimethyl-5-(isocyanatomethyl)cyclohexan (Isophorondiisocyanat), 1,3- oder 1,4-Bis(isocyanatomethyl)cyclohexan oder 2,4-, oder 2,6-Diisocyanato-1-methylcyclohexan sowie aromatische Diisocyanate wie 2,4- oder 2,6-Toluylendiisocyanat und deren Isomerengemische, m- oder p-Xylylendiisocyanat, 2,4'- oder 4,4'-Diisocyanatodiphenylmethan und deren Isomerengemische, 1,3- oder 1,4-Phenylendiisocyanat, 1-Chlor-2,4-phenylendiisocyanat, 1,5-Naphthylendiisocyanat, Diphenylen-4,4'-diisocyanat, 4,4'-Diisocyanato-3,3'-dimethyldiphenyl, 3-Methyldiphenylmethan-4,4'-diisocyanat, Tetramethylxylylendiisocyanat, 1,4-Diisocyanatobenzol oder Diphenylether-4,4'-diisocyanat.

Es können auch Gemische der genannten Diisocyanate vorliegen.

Als Polyisocyanate kommen Isocyanuratgruppen aufweisende Polyisocyanate, Uretdiondiisocyanate, Biuretgruppen aufweisende Polyisocyanate, Amidgruppen aufweisende Polyisocyanate, Urethan- oder Allophanatgruppen aufweisende Polyisocyanate, Oxadiazintriongruppen oder Iminooxadiazindiongruppen enthaltende Polyisocyanate, Carbodiimid- oder Uretonimin-modifizierte Polyisocyanate von geradlinigen oder verzweigten C₄-C₂₀-Alkylendiisocyanaten, cycloaliphatischen Diisocyanaten mit insgesamt 6 bis 20 C-Atomen oder aromatischen Diisocyanaten mit insgesamt 8 bis 20 C-Atomen oder deren Gemische in Betracht.

Die einsetzbaren Di- und Polyisocyanate haben bevorzugt einen Gehalt an Isocyanatgruppen (berechnet als NCO, Molekulargewicht = 42) von 1 bis 60 Gew.% bezogen auf das Di- und Polyisocyanat(gemisch), bevorzugt 2 bis 60 Gew.% und besonders bevorzugt 10 bis 55 Gew.%.

Bevorzugt sind aliphatische bzw. cycloaliphatische Di- und Polyisocyanate, z.B. die vorstehend genannten aliphatischen bzw. cycloaliphatischen Diisocyanate, oder deren Mischungen.

Besonders bevorzugt sind Hexamethylendiisocyanat, 1,3-Bis(isocyanatomethyl)-cyclohexan, Isophorondiisocyanat und Di(isocyanatocyclohexyl)methan, ganz besonders bevorzugt sind Isophorondiisocyanat und Hexamethylendiisocyanat, insbesondere bevorzugt ist Hexamethylendiisocyanat.

Weiterhin bevorzugt sind
1) Isocyanuratgruppen aufweisende Polyisocyanate von aromatischen, aliphatischen und/oder cycloaliphatischen Diisocyanaten. Besonders bevorzugt sind hierbei die entsprechenden aliphatischen und/oder cycloaliphatischen Isocyanato-Isocyanurate und insbesondere die auf Basis von Hexamethylendiisocyanat und Isophorondiisocyanat. Bei den dabei vorliegenden Isocyanuraten handelt es sich insbesondere um Tris-isocyanatoalkyl- bzw. Tris-isocyanatocycloalkyl-Isocyanurate, welche cyclische Trimere der Diisocyanate darstellen, oder um Gemische mit ihren höheren, mehr als einen Isocyanuratring aufweisenden Homologen. Die Isocyanato-Isocyanurate haben im allgemeinen einen NCO-Gehalt von 10 bis 30 Gew.-%, insbesondere 15 bis 25 Gew.-% und eine mittlere NCO-Funktionalität von 2,6 bis 4,5.
2) Uretdiondiisocyanate mit aromatisch, aliphatisch und/oder cycloaliphatisch gebundenen Isocyanatgruppen, vorzugsweise aliphatisch und/oder cycloaliphatisch gebundenen und insbesondere die von Hexamethylendiisocyanat oder Isophorondiisocyanat abgeleiteten. Bei Uretdiondiisocyanaten handelt es sich um cyclische Dimerisierungsprodukte von Diisocyanaten.
   Die Uretdiondiisocyanate können in den erfindungsgemäßen Zubereitungen als alleinige Komponente oder im Gemisch mit anderen Polyisocyanaten, insbesondere den unter 1) genannten, eingesetzt werden.
3) Biuretgruppen aufweisende Polyisocyanate mit aromatisch, cycloaliphatisch oder aliphatisch gebundenen, bevorzugt cycloaliphatisch oder aliphatisch gebundenen Isocyanatgruppen, insbesondere Tris(6-isocyanatohexyl)biuret oder dessen Gemische mit seinen höheren Homologen. Diese Biuretgruppen aufweisenden Polyisocyanate weisen im allgemeinen einen NCO-Gehalt von 18 bis 23 Gew.-% und eine mittlere NCO-Funktionalität von 2,8 bis 4,5 auf.
4) Urethan- und/oder Allophanatgruppen aufweisende Polyisocyanate mit aromatisch, aliphatisch oder cycloaliphatisch gebundenen, bevorzugt aliphatisch oder cycloaliphatisch gebundenen Isocyanatgruppen, wie sie beispielsweise durch Umsetzung von überschüssigen Mengen an Hexamethylendiisocyanat oder an Isophorondiisocyanat mit ein- oder mehrwertigen Alkoholen wie z.B. Methanol, Ethanol, *iso*-Propanol, n-Propanol, n-Butanol, *iso*-Butanol, *sek*-Butanol, *tert*-Butanol, n-Pentanol, n-Hexanol, n-Heptanol, n-Octanol, n-Decanol, n-Dodecanol (Laurylalkohol), 2-Ethylhexanol, Stearylalkohol, Cetylalkohol, Laurylalkohol, Ethylenglykolmonomethylether, Ethylenglykolmonoethylether, 1,3-Propandiolmonomethylether, Cyclopentanol, Cyclohexanol, Cyclooctanol, Cyclododecanol oder mehrwertige Alkohole, wie sie oben bei den Polyesterolen aufgeführt sind, oder deren Gemischen erhalten werden können. Diese Urethan- und/oder Allophanatgruppen aufweisenden Polyisocyanate haben im allgemeinen einen NCO-Gehalt von 12 bis 20 Gew.-% und eine mittlere NCO-Funktionalität von 2,5 bis 4,5.
5) Oxadiazintriongruppen enthaltende Polyisocyanate, vorzugsweise von Hexamethylendiisocyanat oder Isophorondiisocyanat abgeleitet. Solche Oxadiazintriongruppen enthaltenden Polyisocyanate sind aus Diisocyanat und Kohlendioxid herstellbar.
6) Iminooxadiazindiongruppen enthaltende Polyisocyanate, vorzugsweise von Hexamethylendiisocyanat oder Isophorondiisocyanat abgeleitet. Solche Iminooxadiazindiongruppen enthaltenden Polyisocyanate sind aus Diisocyanaten mittels spezieller Katalysatoren herstellbar.
7) Carbodiimid- und/oder Uretonimin-modifizierte Polyisocyanate.

Die Polyisocyanate 1) bis 7) können im Gemisch, gegebenenfalls auch im Gemisch mit Diisocyanaten, eingesetzt werden.

Die Isocyanatgruppen der Di- oder Polyisocyanate können auch in verkappter Form vorliegen. Als Verkappungsmittel für NCO-Gruppen eignen sich z.B. Oxime, Phenole, Imidazole, Pyrazole, Pyrazolinone, Triazole, Diketopiperazine, Caprolactam, Malonsäureester oder Verbindungen, wie sie genannt sind in den Veröffentlichungen von Z.W. Wicks, Prog. Org. Coat. 3 (1975) 73 - 99 und Prog. Org. Coat 9 (1981), 3 - 28, von D.A. Wicks und Z.W. Wicks, Prog. Org. Coat. 36 (1999), 148 - 172 und Prog. Org. Coat. 41 (2001), 1 - 83 sowie in Houben-Weyl, Methoden der Organischen Chemie, Bd. XIV/2, 61 ff. Georg Thieme Verlag, Stuttgart 1963.

Unter Verkappungs- bzw. Blockierungsmitteln werden dabei Verbindungen verstanden, die Isocyanatgruppen in blockierte (verkappte bzw. geschützte) Isocyanatgruppen umwandeln, die dann unterhalb der sogenannten Deblockierungstemperatur nicht die üblichen Reaktionen einer freien Isocyanatgruppe zeigen. Solche Verbindungen mit blockierten Isocyanatgruppen kommen üblicherweise in Dual-Cure-Beschichtungsmitteln oder in Pulverlacken zur Anwendung, die über Isocyanatgruppenhärtung endgehärtet werden.

Epoxidverbindungen sind solche mit mindestens einer, bevorzugt mit mindestens zwei, besonders bevorzugt zwei bis zehn Epoxidgruppen im Molekül.

In Betracht kommen z.B. epoxidierte Olefine, Glycidylester (z.B. Glycidyl(meth)acrylat) von gesättigten oder ungesättigten Carbonsäuren oder Glycidylether aliphatischer oder aromatische Polyole. Derartige Produkte werden im Handel in großer Zahl angeboten. Besonders bevorzugt sind Polyglycidylverbindungen vom Bisphenol A-, -F- oder -B-Typ und Glycidylether mehrfunktioneller Alkohole, z.B. des Butandiol, des 1,6-Hexandiol, des Glycerin und des Pentaerythrit. Beispiele für derartige Polyepoxidverbindungen sind Epikote^{®} 812 (Epoxidwert: ca. 0,67 mol/100g) und Epikote^{®} 828 (Epoxidwert: ca. 0,53 mol/100g), Epikote^{®} 1001, Epikote^{®} 1007 und Epikote^{®} 162 (Epoxidwert: ca. 0,61 mol/100g) der Firma Resolution, Rütapox® 0162 (Epoxidwert: ca. 0,58 mol/100g), Rütapox^{®} 0164 (Epoxidwert: ca. 0,53 mol/100g) und Rütapox^{®} 0165 (Epoxidwert: ca. 0,48 mol/100g) der Firma Bakelite AG, Araldit^{®} DY 0397 (Epoxidwert: ca. 0,83 mol/100g) der Firma Vantico AG.

Carbonatverbindungen sind solche mit mindestens einer, bevorzugt mit mindestens zwei, vorzugsweise zwei oder drei Carbonatgruppen im Molekül, die bevorzugt endständige C₁-C₂₀-Alkylcarbonatgruppen enthalten, besonders bevorzugt endständige C₁-C₄-Alkylcarbonatgruppen, ganz besonders bevorzugt endständiges Methylcarbonat, Ethylcarbonat oder n-Butylcarbonat.

Weiterhin kommen Verbindungen mit aktiven Methylol- oder Alkylalkoxygruppen, insbesondere Methylalkoxygruppen in Frage, wie z.B veretherte Umsetzungsprodukte von Formaldehyd mit Aminen, wie Melamin, Harnstoff etc., Phenol/Formaldehydaddukte, Siloxan oder Silangruppen und Anhydride, wie sie z.B. in US 5,770,650 beschrieben sind.

Unter den technisch weit verbreiteten und bekannten, bevorzugten Aminoplasten sind besonders bevorzugt Harnstoffharze und Melaminharze, wie z.B. Harnstoff-Formaldehyd-Harze, Melamin-Formaldehyd-Harze, Melamin-Phenol-Formaldehyd-Harze oder Melamin-Harnstoff-Formaldehyd-Harze, verwendbar.

Als Harnstoffharze sind solche geeignet, die durch Umsetzung von Harnstoffen mit Aldehyden erhältlich sind und gegebenenfalls modifiziert werden können.

Als Harnstoffe sind Harnstoff, N-substituierte oder N,N'-disubstituierte Harnstoffe geeignet, wie z.B. N-Methylharnstoff, N-Phenylharnstoff, N,N'-Dimethylharnstoff, Hexamethylendiharnstoff, N,N'-Diphenylharnstoff, 1,2-Ethylendihamstoff, 1,3-Propylendiharnstoff, Diethylentriharnstoff, Dipropylentriharnstoff, 2-Hydroxypropylendiharnstoff, 2-Imidazolidinon (Ethylenharnstoff), 2-Oxohexahydropyrimidin (Propylenharnstoff) oder 2-Oxo-5-Hydroxyhexahydropyrimidin (5-Hydroxypropylenharnstoff).

Harnstoffharze können gegebenenfalls teilweise oder vollständig modifiziert werden, z.B. durch Umsetzung mit mono- od. polyfunktionellen Alkoholen, Ammoniak bzw. Aminen (kationisch modifizierte Harnstoffharze) oder mit (Hydrogen)sulfiten (anionisch modifizierte Harnstoffharze), insbesondere geeignet sind die alkoholmodifizierten Harnstoffharze.

Als Alkohole kommen für die Modifizierung C₁ - C₆-Alkohole in Frage, bevorzugt C₁ - C₄-Alkylalkohol und insbesondere Methanol, Ethanol, *iso*-Propanol, n-Propanol, n-Butanol, *iso*-Butanol und *sek*-Butanol.

Als Melaminharze sind solche geeignet, die durch Umsetzung von Melamin mit Aldehyden erhältlich sind und gegebenenfalls teilweise oder vollständig modifiziert werden können.

Als Aldehyde sind insbesondere Formaldehyd, Acetaldehyd, *Iso*-Butyraldehyd und Glyoxal geeignet.

Melamin-Formaldehyd-Harze sind Reaktionsprodukte der Umsetzung von Melamin mit Aldehyden, z.B. den o.g. Aldehyden, insbesondere Formaldehyd. Gegebenenfalls werden die erhaltenen Methylol-Gruppen durch Veretherung mit den oben genannten ein- oder mehrwertigen Alkoholen modifiziert. Weiterhin können die Melamin-Formaldehyd-Harze auch wie oben beschrieben durch Reaktion mit Aminen, Aminocarbonsäuren oder Sulfiten modifiziert werden.

Durch Einwirkung von Formaldehyd auf Mischungen von Melamin und Harnstoff beziehungsweise auf Mischungen aus Melamin und Phenol entstehen erfindungsgemäß ebenfalls verwendbare Melamin-Harnstoff-Formaldehyd-Harze beziehungsweise Melamin-Phenol-Formaldehyd-Harze.

Die Herstellung der genannten Aminoplaste erfolgt nach an sich bekannten Verfahren.

Besonders genannte Beispiele sind Melamin-Formaldehyd-Harze, einschließlich monomerer oder polymerer Melaminharze und teilweise oder vollständig alkylierte Melaminharze, Harnstoff-Harze, z.B. Methylolharnstoffe wie Formaldehyd-Harnstoff-Harze, Alkoxyharnstoffe wie butylierte Formaldehyd-Harnstoff-Harze, aber auch N-Methylolacrylamid-emulsionen, *iso*-Butoxy methyl acrylamid-emulsionen, Polyanhydride, wie z.B. Polybernsteinsäureanhydrid, und Siloxane oder Silane, z.B. Dimethyldimethoxysilane.

Besonders bevorzugt sind Aminoplastharze wie Melamin-Formaldehyd-Harze oder Formaldehyd-Harnstoff-Harze.

Bei den Lacken, in denen die erfindungsgemäßen Polyester einsetzbar sind, kann sich um konventionelle Basislacke, Wasserbasislacke, im wesentlichen lösemittel- und wasserfreie flüssige Basislacke (100%-Systeme), im wesentlichen lösemittel- und wasserfreie feste Basislacke (Pulverlacke und pigmentierte Pulverlacke) oder im wesentlichen lösemittelfreie, ggf. pigmentierte Pulverlackdispersionen (Pulverslurry-Basislacke) handeln. Sie können thermisch, strahlungs- oder DuaiCure-härtbar, und selbst- oder fremdvernetzend sein.

Die nach dem erfindungsgemäßen Verfahren gebildeten hochfunktionellen hochverzweigten Polyester sind nach der Reaktion, also ohne weitere Modifikation, mit Hydroxylgruppen und/oder mit Säuregruppen terminiert. Sie lösen sich in der Regel gut in verschiedenen Lösemitteln, zum Beispiel in Wasser, Alkoholen, wie Methanol, Ethanol, Butanol, Alkohol/Wasser-Mischungen, Aceton, 2-Butanon, Essigester, Butylacetat, Methoxypropylacetat, Methoxyethylacetat, Tetrahydrofuran, Dimethylformamid, Dimethylacetamid, N-Methylpyrrolidon, Ethylencarbonat oder Propylencarbonat.

Unter einem hochfunktionellen Polyester ist im Rahmen dieser Erfindung ein Produkt zu verstehen, das neben den Estergruppen, die das Polymergerüst verknüpfen, end- und/oder seitenständig weiterhin mindestens drei, bevorzugt mindestens sechs, besonders bevorzugt mindestens zehn funktionelle Gruppen aufweist. Bei den funktionellen Gruppen handelt es sich um Säuregruppen und/oder um OH-Gruppen. Die Anzahl der end- oder seitenständigen funktionellen Gruppen ist prinzipiell nach oben nicht beschränkt, jedoch können Produkte mit sehr hoher Anzahl funktioneller Gruppen unerwünschte Eigenschaften, wie beispielsweise hohe Viskosität, aufweisen. Die hochfunktionellen Polyester der vorliegenden Erfindung weisen zumeist nicht mehr als 500 end- und/oder seitenständige funktionelle Gruppen, bevorzugt nicht mehr als 100 end- und/oder seitenständige funktionelle Gruppen auf.

In einer bevorzugten Ausführungsform der Erfindung kann man den erfindungsgemäßen Polyester gemäß Variante a) herstellen, indem man in einer ersten Phase der Reaktion, d.h. beispielsweise während der ersten Hälfte der gesamten Reaktionszeit, bevorzugt während des ersten Viertels und besonders bevorzugt während der ersten 10% der gesamten Reaktionszeit, keinen oder lediglich einen geringen Teil der Gesamtmenge x-wertigen Alkohol Cₓ in die Reaktion einsetzt, beispielsweise 0 bis 90 %, bevorzugt 0 bis 75%, besonders bevorzugt 10 bis 66 % und ganz besonders bevorzugt 25 bis 50 %.

Die restliche Menge x-wertiger Alkohol Cₓ wird erst dann in die Reaktion eingesetzt, wenn die oben genannte erste Phase der Reaktion abgelaufen ist.

Diese Reaktionsführung führt zu erfindungsgemäßen Polyestern, die im Inneren im wesentlichen linear aufgebaut sind, wohingegen sich die Verzweigungen im wesentlichen an den Kettenenden befinden.

In einer weiteren bevorzugten Ausführungsform der Erfindung kann man den erfindungsgemäßen Polyester gemäß Variante b) herstellen, indem man in einer ersten Phase der Reaktion, d.h. beispielsweise während der ersten Hälfte der gesamten Reaktionszeit, bevorzugt während des ersten Viertels und besonders bevorzugt während der ersten 10% der gesamten Reaktionszeit, keinen oder lediglich einen geringen Teil der Gesamtmenge der y-wertigen Carbonsäure D_{y} in die Reaktion einsetzt, beispielsweise 0 bis 90 %, bevorzugt 0 bis 75%, besonders bevorzugt 10 bis 66 % und ganz besonders bevorzugt 25 bis 50 %.

Die restliche Menge y-wertige Carbonsäure D_{y} wird erst dann in die Reaktion eingesetzt, wenn die oben genannte erste Phase der Reaktion abgelaufen ist.

Diese Reaktionsführung führt ebenfalls zu erfindungsgemäßen Polyestern, die im Inneren im wesentlichen linear aufgebaut sind, wohingegen sich die Verzweigungen im wesentlichen an den Kettenenden befinden.

In einer weiteren bevorzugten Ausführungsform der Erfindung kann man den erfindungsgemäßen Polyester gemäß Variante a) herstellen, indem man in einer ersten Phase der Reaktion, d.h. beispielsweise während der ersten Hälfte der gesamten Reaktionszeit, bevorzugt während des ersten Viertels und besonders bevorzugt während der ersten 10% der gesamten Reaktionszeit, keinen oder lediglich einen geringen Teil der Gesamtmenge zweiwertigen Alkohols B₂ in die Reaktion einsetzt, beispielsweise 0 bis 90 %, bevorzugt 0 bis 75%, besonders bevorzugt 10 bis 66 % und ganz besonders bevorzugt 25 bis 50 %.
Die restliche Menge zweiwertiger Alkohol B₂ wird erst dann in die Reaktion eingesetzt, wenn die oben genannte erste Phase der Reaktion abgelaufen ist.

Diese Reaktionsführung führt zu erfindungsgemäßen Polyestern, die im Inneren im wesentlichen verzweigt aufgebaut sind, wohingegen sich von den Verzweigungen im wesentlichen lineare Ketten ausbreiten.

In einer weiteren bevorzugten Ausführungsform der Erfindung kann man den erfindungsgemäßen Polyester gemäß Variante b) herstellen, indem man in einer ersten Phase der Reaktion, d.h. beispielsweise während der ersten Hälfte der gesamten Reaktionszeit, bevorzugt während des ersten Viertels und besonders bevorzugt während der ersten 10% der gesamten Reaktionszeit, keinen oder lediglich einen geringen Teil der Gesamtmenge der zweiwertigen Carbonsäure A₂ in die Reaktion einsetzt, beispielsweise 0 bis 90 %, bevorzugt 0 bis 75%, besonders bevorzugt 10 bis 66 % und ganz besonders bevorzugt 25 bis 50 %.

Die restliche Menge zweiwertige Carbonsäure A₂ wird erst dann in die Reaktion eingesetzt, wenn die oben genannte erste Phase der Reaktion abgelaufen ist.

Diese Reaktionsführung führt ebenfalls zu erfindungsgemäßen Polyestern, die im Inneren im wesentlichen verzweigt aufgebaut sind, wohingegen sich von den Verzweigungen im wesentlichen lineare Ketten ausbreiten.

In einer weiteren bevorzugten Ausführungsform können die erfindungsgemäßen Polyester neben den bereits durch die Reaktion erhaltenden funktionellen Gruppen weitere funktionelle Gruppen aufweisen. Eine Funktionalisierung kann dabei während des Molekulargewichtsaufbaus oder auch nachträglich, d.h. nach Beendigung der eigentlichen Umsetzung in den Schritten a) und b) erfolgen. Dies bedeutet, daß der Umsatz der Komponenten A₂, B₂, Cₓ und/oder D_{y} zu mindestens 75%, bevorzugt zu mindestens 80, besonders bevorzugt zu mindestens 85, ganz besonders bevorzugt zu mindestens 90, insbesondere zu mindestens 95 und speziell zu mindestens 97% abgeschlossen ist. Eine Funktionalisierung mit gesättigten oder ungesättigten Monocarbonsäuren während des Molekulargewichtsaufbaus ist dabei erfindungsgemäß ausgeschlossen.

Gibt man vor oder während des Molekulargewichtsaufbaus Komponenten zu, die neben Hydroxyl- oder Carboxylgruppen weitere funktionelle Gruppen oder funktionelle Elemente besitzen, so erhält man ein Polyester-Polymer mit statistisch verteilten von den Carboxyl-oder Hydroxylgruppen verschiedenen Funktionalitäten.

Funktionelle Gruppen können beispielsweise weiterhin sein Ethergruppen, Carbonatgruppen, Urethangruppen, Harnstoffgruppen, Thiolgruppen, Thioethergruppen, Thioestergruppen, Keto- oder Aldehydgruppen, mono-, di-, oder trisubstituierte Aminogruppen, Nitril- oder Isonitrilgruppen, Carbonsäureamidgruppen, Sulfonamidgruppen, Silangruppen oder Siloxangruppen, Sulfonsäure-, Sulfensäure- oder Sulfinsäuregruppen, Phosphonsäuregruppen, Vinyl- oder Allylgruppen oder Lactongruppen.

Derartige Effekte lassen sich zum Beispiel durch Zusatz von funktionalisierten Bausteinen E als Verbindungen während der Polykondensation erzielen, die neben Hydroxylgruppen oder Carboxylgruppen weitere funktionelle Gruppen oder funktionelle Elemente, wie Mercaptogruppen, primäre, sekundäre oder tertiäre Aminogruppen, Ethergruppen, Carbonylgruppen, Sulfonsäuren oder Derivate von Sulfonsäuren, Sulfinsäuren oder Derivate von Sulfinsäuren, Phosphonsäuren oder Derivate von Phosphonsäuren, Phosphinsäuren oder Derivate von Phosphinsäuren, Silangruppen, Siloxangruppen, tragen. Zur Modifikation mittels Amid-Gruppen lassen sich bei der Veresterung beispielsweise Ethanolamin, Propanolamin, Isopropanolamin, 2-(Butylamino)ethanol, 2-(Cyclohexylamino)ethanol, 2-Amino-1-butanol, 2-(2'-Aminoethoxy)ethanol oder höhere Alkoxylierungsprodukte des Ammoniaks, 4-Hydroxypiperidin, 1-hydroxymethylpiperazin, Diethanolamin, Dipropanolamin, Diisopropanolamin, Tris(hydroxymethyl)-aminomethan, Tris(hydroxyethyl)aminomethan, Ethylendiamin, Propylendiamin, Hexamethylendiamin oder Isophorondiamin zusätzlich verwenden.

Für die Modifikation mit Mercaptogruppen lässt sich zum Beispiel Mercaptoethanol einsetzten. Tertiäre Aminogruppen lassen sich zum Beispiel durch Einbau von N-Methyldiethanolamin, N-Methyldipropanolamin oder N,N-Dimethylethanolamin erzeugen. Ethergruppen können zum Beispiel durch Einkondensation von di- oder höherfunktionellen Polyetherolen generiert werden. Durch Reaktion mit langkettigen Alkandiolen lassen sich langkettige Alkylreste einbringen, die Reaktion mit Alkyl- oder Aryldiisocyanaten generiert Alkyl-, Aryl- und Urethangruppen aufweisende Polyester.

Eine nachträgliche Funktionalisierung kann man erhalten, indem der erhaltene hochfunktionelle, hoch- oder hyperverzweigte Polyester in einem zusätzlichen Verfahrensschritt mit einem geeigneten Funktionalisierungsreagenz, welches mit den OH- und/oder Carboxyl-Gruppen des Polyesters reagieren kann, umsetzt.

Eine Funktionalisierung von hydroxygruppenhaltigen erfindungsgemäßen Polyestern mit gesättigten oder ungesättigten, aliphatischen, cycloaliphatischen, araliphatischen oder aromatischen Monocarbonsäuren F kann erfindungsgemäß ausschließlich nachträglich, d.h. nach Beendigung der eigentlichen Umsetzung in den Schritten a) und b) in einem gesonderten Schritt c) erfolgen.

Geeignete gesättigte Monocarbonsäuren F können 1 bis 30 Kohlenstoffatome umfassen, bevorzugt 2 bis 30, besonders bevorzugt 4 bis 25, ganz besonders bevorzugt 6 bis 20 und insbesondere 8 bis 20 Kohlenstoffatome.

Beispiele für geeignete gesättigte Monocarbonsäuren F sind Ameisensäure, Essigsäure, Propionsäure, Buttersäure, Pivalinsäure, Capronsäure, 2-Ethylhexansäure, Octansäure, Isononansäure, Caprinsäure, Undecansäure, Laurinsäure, Myristinsäure, Pentadecansäure, Palmitinsäure, Margarinsäure, Stearinsäure, Nonadecansäure, Arachinsäure, Behensäure, Ölsäure, Linolsäure, Linolensäure, Benzoesäure, α- oder β-Naphthalinsäure.

Geeignete α,β-ungesättigte Monocarbonsäuren F können 3 bis 20 Kohlenstoffatome umfassen, bevorzugt 3 bis 10, besonders bevorzugt 3 bis 6, ganz besonders bevorzugt 3 bis 5 und insbesondere 3 bis 4 Kohlenstoffatome.

Beispiele für geeignete α,β-ungesättigte Monocarbonsäuren F sind Acrylsäure, Methacrylsäure, Ethacrylsäure, α-Chloracrylsäure, Maleinsäure, Fumarsäure, Itaconsäure, Crotonsäure, Citraconsäure, Mesaconsäure oder Glutaconsäure, bevorzugt sind Acrylsäure, Methacrylsäure, Maleinsäure, Fumarsäure, Itaconsäure und Crotonsäure, besonders bevorzugt sind Acrylsäure, Methacrylsäure, Maleinsäure, Fumarsäure und Crotonsäure, ganz besonders bevorzugt sind Acrylsäure und Methacrylsäure und insbesondere Acrylsäure.

Die Umsetzung mit gesättigten oder ungesättigten Monocarbonsäuren F kann statt mit den Carbonsäuren auch mit deren Derivaten erfolgen, beispielsweise mit deren Anhydriden, Chloriden oder Estern, bevorzugt mit deren Anhydriden oder Estern, besonders bevorzugt mit deren Estern mit C₁-C₄-Alkylalkoholen, ganz besonders bevorzugt mit deren Methylestern.

Eine Umsetzung im Sinne einer Veresterung kann beispielsweise in Gegenwart mindestens eines Veresterungskatalysators erfolgen, wie beispielsweise Schwefelsäure, Aryl- oder Alkylsulfonsäuren oder Gemische davon. Beispiele für Arylsulfonsäuren sind Benzolsulfonsäure, para-Toluolsulfonsäure oder Dodecylbenzolsulfonsäure, Beispiele für Alkylsulfonsäuren sind Methansulfonsäure, Ethansulfonsäure oder Trifluormethansulfonsäure. Auch stark saure Ionentauscher oder Zeolithe sind als Veresterungskatalysatoren einsetzbar. Bevorzugt sind Schwefelsäure und Ionentauscher.

Die Temperatur der Reaktion beträgt in der Regel 40 - 160 °C, es kann sinnvoll sein, während der Reaktion entstehendes Wasser mit Hilfe eines azeotropbildenden Lösungsmittels zu entfernen, wie beispielsweise n-Pentan, n-Hexan, n-Heptan, Cyclohexan, Methylcyclohexan, Benzol, Toluol oder Xylol.

Falls das im Reaktionsgemisch enthaltene Wasser nicht über ein azeotropbildendes Lösungsmittel entfernt wird, so ist es möglich, dieses über Strippen mit einem inerten Gas, bevorzugt einem sauerstoffhaltigen Gas, besonders bevorzugt mit Luft oder Magerluft zu entfernen.

Eine Umsetzung im Sinne einer Umesterung kann beispielsweise in Gegenwart mindestens eine Umesterungskatalysators erfolgen, beispielsweise Metallchelatverbindungen von z. B. Hafnium, Titan, Zirkon oder Calcium, Alkali- und Magnesiumalkoholate, organische Zinnverbindungen oder Calcium- und Lithiumverbindungen, beispielsweise -Oxide, -Hydroxyde, -Carbonate oder-Halogenide, vorzugsweise jedoch Titan-, Magnesium- oder Aluminiumalkoholate.

Der bei der Umesterung freigesetzte Alkohol kann beispielsweise durch Destillation, Strippen oder Anlegen von Vakuum entfernt werden.

Die Reaktionstemperatur beträgt in der Regel 80 - 140°C.

Zur Unterdrückung einer Polymerisation in der Umsetzung von α,β-ungesättigten Carbonsäuren oder deren Derivaten kann es sinnvoll sein, in Gegenwart von handelsüblichen Polymerisationsinhibitoren zu arbeiten, die dem Fachmann an sich bekannt sind.

Derartige Ester von α,β-ungesättigten Carbonsäuren mit den erfindungsgemäßen Polyestern können beispielsweise in strahlungshärtbaren Beschichtungsmassen eingesetzt werden.

Hydroxylgruppen enthaltende hochfunktionelle, hoch oder hyperverzweigte Polyester können zum Beispiel durch Zugabe von Isocyanatgruppen enthaltenden Molekülen modifiziert werden. Beispielsweise lassen sich Urethangruppen enthaltende Polyester durch Umsetzung mit Alkyl- oder Arylisocyanaten erhalten.

Weiterhin können Hydroxylgruppen enthaltende hochfunktionelle Polyester auch durch Umsetzung mit Alkylenoxiden, zum Beispiel Ethylenoxid, Propylenoxid oder iso-Butylenoxid, in hochfunktionelle Polyester-Polyetherpolyole überführt werden. Diese Verbindungen können dann beispielsweise wasserlöslich erhalten werden.

Die erfindungsgemäß erhältlichen Polyester weisen in der Regel eine Viskosität von nicht mehr als 100 Paxs auf (gemessen bei 80 °C gemäß DIN EN 3219).

Die erfindungsgemäß erhältlichen Polyester weisen in der Regel eine Glasübergangstemperatur von -40 bis 100 °C auf.

Die erfindungsgemäß erhältlichen Polyester besitzen eine Summe von Säurezahl und OH-Zahl gemäß DIN 53240, Teil 2 von bis zu 500 mg KOH/g.

Die Glasübergangstemperatur T_{g} wird mit der DSC-Methode (Differential Scanning Calorimetry) gemäß ASTM 3418/82 bestimmt.

In einer bevorzugten Ausführungsform der vorliegenden Erfindung werden solche erfindungsgemäßen Polyester, die ein T_{g} von -40 bis 60 °C aufweisen in Druckfarben verwendet, da hier besonders eine gute Haftung der Druckfarbe auf dem Untergrund gegebenenfalls in Kombination mit Klebkraft gegenüber einer Deckschicht erhalten wird.

In einer bevorzugten Ausführungsform der vorliegenden Erfindung werden solche erfindungsgemäßen Polyester, die eine Glasübergangstemperatur T_{g} von mindestens 0 °C aufweisen in Beschichtungsmassen und Lacken verwendet. Dieser Bereich der Glasübergangstemperatur ist zum Erreichen zum Beispiel einer ausreichenden Lackhärte und Chemikalienbeständigkeit vorteilhaft.

### Beispiele

Beispiele für erfindungsgemäße hoch- oder hyperverzweigte Polyester

### Beispiel 1:

Polyester aus 1,2-Cyclohexandicarbonsäureanhydrid, Pentaerythrit und 1,4-Cyclohexandiol
58,8 g (0,38 mol) Cyclohexan-1,2-dicarbonsäureanhydrid, 28,6 g (0,21 mol) Pentaerythrit und 12,6 g (0,11 mol) 1,4-Cyclohexandiol wurden in einem 250-mL-Vierhals-Glaskolben vorgelegt, der mit Rührer, Innenthermometer, Gaseinleitungsrohr für Stickstoff, Rückflusskühler und Vakuumanschluss mit Kühlfalle ausgerüstet war. Unter leichtem Stickstoffstrom gab man 0,1 g Di-n-Butylzinnoxid zu, kommerziell erhältlich als Fascat® 4201 der Firma Atochem, und erhitzte mit Hilfe eines Ölbads auf eine Innentemperatur von 155°C. Man legte einen verminderten Druck von 60 mbar an, um bei der Reaktion gebildetes Wasser abzutrennen. Die Reaktionsmischung wurde 9 Stunden bei der genannten Temperatur und dem genannten Druck gehalten. Nach dem Abkühlen fiel das Reaktionsprodukt als transparenter Feststoff an. Die analytischen Daten sind in Tabelle 1 zusammengefasst.

### Beispiel 2:

Polyester aus Adipinsäure, Pentaerythrit und 1,4-Cyclohexandiol
58,2 g (0,40 mol) Adipinsäure, 22,6 g (0,17 mol) Pentaerythrit und 22,8 g (0,16 mol) 1,4-Cyclohexandiol wurden in dem in Beispiel 1 genannten Reaktionsgefäß vorgelegt und mit Stickstoff begast. Nach Zugabe von 0,1 g Di-n-Butylzinnoxid wurde mit Hilfe eines Ölbads auf eine Innentemperatur von 135°C erhitzt. Man legte einen verminderten Druck von 70 mbar an, um bei der Reaktion gebildetes Wasser abzutrennen. Die Reaktionsmischung wurde 4 Stunden bei der genannten Temperatur und dem genannten Druck gehalten. Nach dem Abkühlen erhielt man den hyperverzweigten Polyester als klare, sehr viskose Flüssigkeit. Die analytischen Daten sind in Tabelle 1 zusammengefasst.

### Beispiel 3:

Polyester aus Adipinsäure, Pentaerythrit und 1,4-Cyclohexandimethanol
55,6 g (0,38 mol) Adipinsäure, 21,6 g (0,16 mol) Pentaerythrit und 22,8 g (0,16 mol) 1,4-Cyclohexandimethanol wurden in dem in Beispiel 1 genannten Reaktionsgefäß vorgelegt und mit Stickstoff begast. Nach Zugabe von 0,1 g Di-n-Butylzinnoxid wurde mit Hilfe eines Ölbads auf eine Innentemperatur von 135°C erhitzt. Man legte einen verminderten Druck von 60 mbar an, um bei der Reaktion gebildetes Wasser abzutrennen. Die Reaktionsmischung wurde 4,5 Stunden bei der genannten Temperatur und dem genannten Druck gehalten. Nach Abkühlen auf Raumtemperatur wurde der Polyester als klare, sehr viskose Flüssigkeit erhalten. Die analytischen Daten sind in Tabelle 1 zusammengefasst.

### Beispiel 4:

Polyester aus Phthalsäureanhydrid, Pentaerythrit und 1,4-Cyclohexandimethanol
55,9 g (0,38 mol) Phthalsäureanhydrid, 21,4 g (0,16 mol) Pentaerythrit und 22,7 g (0,16 mol) 1,4-Cyclohexandimethanol wurden in dem in Beispiel 1 genannten Reaktionsgefäß vorgelegt und mit Stickstoff begast. Nach Zugabe von 0,1 g Di-n-Butylzinnoxid wurde mit Hilfe eines Ölbads auf eine Innentemperatur von 150°C erhitzt. Man legte einen verminderten Druck von 60 mbar an, um bei der Reaktion gebildetes Wasser abzutrennen. Die Reaktionsmischung wurde 4 Stunden bei der genannten Temperatur und dem genannten Druck gehalten. Man erhielt den hyperverzweigten Polyester nach dem Abkühlen in Form eines klaren Feststoffes. Die analytischen Daten sind in Tabelle 1 zusammengefasst.

### Beispiel 5:

Polyester aus Phthalsäureanhydrid, Pentaerythrit und 1,4-Cyclohexandiol
59,1 g (0,40 mol) Phthalsäureanhydrid, 15,4 g (0,11 mol) Pentaerythrit und 25,5 g (0,16 mol) 1,4-Cyclohexandiol wurden in dem in Beispiel 1 genannten Reaktionsgefäß vorgelegt und mit Stickstoff begast. Nach Zugabe von 0,1 g Di-n-Butylzinnoxid wurde mit Hilfe eines Ölbads auf eine Innentemperatur von 150°C erhitzt. Man legte einen verminderten Druck von 70 mbar an, um bei der Reaktion gebildetes Wasser abzutrennen. Die Reaktionsmischung wurde 7 Stunden bei der genannten Temperatur und dem genannten Druck gehalten. Man erhielt den hyperverzweigten Polyester nach dem Abkühlen in Form eines klaren Feststoffes. Die analytischen Daten sind in Tabelle 1 zusammengefasst.

### Beispiel 6:

Polyester aus Bernsteinsäure, Phthalsäureanhydrid, Butandiol und Triglycerin
150 g (1,27 mol) Bernsteinsäure, 8,2 g (0,055 mol) Phthalsäureanhydrid, 163,6 g (0,55 mol) Butandiol und 265,4 g (1,105 mol) Triglycerin (Polyglycerol-3, Fa. Solvay) wurden in einem 1000-mL-Vierhals-Glaskolben vorgelegt, der mit Rührer, Innenthermometer, Gaseinleitungsrohr, Rückflusskühler und Vakuumanschluss mit Kühlfalle ausgerüstet war. Unter Begasung mit einem leichten Stickstoffstrom gab man 1000 ppm Schwefelsäure in Form von 0,42 mL einer 2% wässrigen Lösung zu und erhitzte mit Hilfe eines Ölbads auf eine Innentemperatur von 130°C. Man legte einen verminderten Druck von 20 mbar an, um bei der Reaktion gebildetes Wasser abzutrennen. Die Reaktionsmischung wurde 15 Stunden bei der genannten Temperatur und dem genannten Druck gehalten. Nach dem Abkühlen erhielt man den Polyester in Form eines klaren Feststoffes. Die analytischen Daten sind in Tabelle 1 zusammengefasst.

### Beispiel 7:

Polyester aus Adipinsäure, Trimethylolpropan und 1,4-Cyclohexandimethanol
233,8 g (1,6 mol) Adipinsäure, 118,1 g (0,88 mol) Trimethylolpropan und 22,8 g (0,16 mol) 1,4-Cyclohexandimethanol wurden in dem in Beispiel 6 genannten Reaktionsgefäß vorgelegt und mit Stickstoff begast. Man gab 0,41 g Di-n-Butylzinnoxid zu und erhitzte mit Hilfe eines Ölbads auf eine Innentemperatur von 115°C. Man legte einen verminderten Druck von 100 mbar an, um bei der Reaktion gebildetes Wasser abzutrennen. Die Reaktionsmischung wurde 5,5 Stunden bei der genannten Temperatur und dem genannten Druck gehalten. Das Produkt fiel nach dem Abkühlen als klare, viskose Flüssigkeit an. Die analytischen Daten sind in Tabelle 1 zusammengefasst.

### Beispiel 8:

Polyester aus Adipinsäure, Pentaerythrit und 1,4-Cyclohexandimethanol
233,8 g (1,6 mol) Adipinsäure, 119,8 g (0,88 mol) Pentaerythrit und 63,5 g (0,44 mol) 1,4-Cyclohexandimethanol wurden in dem in Beispiel 6 genannten Reaktionsgefäß vorgelegt und mit Stickstoff begast. Man gab 0,42 g Di-n-Butylzinnoxid zu und erhitzte mit Hilfe eines Ölbads auf eine Innentemperatur von 115°C. Man legte einen verminderten Druck von 100 mbar an, um bei der Reaktion gebildetes Wasser abzutrennen. Die Reaktionsmischung wurde 4 Stunden bei der genannten Temperatur und dem genannten Druck gehalten. Man erhielt den Polyester nach dem Abkühlen als klare, sehr viskose Flüssigkeit. Die analytischen Daten sind in Tabelle 1 zusammengefasst.

### Beispiel 9:

Polyester aus 1,2-Cyclohexandicarbonsäure, Trimethylolpropan und 1,4-Cyclohexandimethanol
1480 g (9,6 mol) Cyclohexan-1,2-dicarbonsäureanhydrid, 354,2 g (2,6 mol) Trimethylolpropan und 761,4 g (5,3 mol) 1,4-Cyclohexandimethanol wurden in einem 4-L-Vierhals-Glaskolben vorgelegt, der mit Rührer, Innenthermometer, Gaseinleitungsrohr, Rückflusskühler und Vakuumanschluss mit Kühlfalle ausgerüstet war. Unter Begasung mit einem leichten Stickstoffstrom gab man 2,6 g Di-n-Butylzinnoxid zu und erhitzte mit Hilfe eines Ölbads auf eine Innentemperatur von 115°C. Man legte einen verminderten Druck von 110 mbar an, um bei der Reaktion gebildetes Wasser abzutrennen. Die Reaktionsmischung wurde 10 Stunden bei der genannten Temperatur und dem genannten Druck gehalten. Das Produkt fiel nach dem Abkühlen als klarer Feststoff an. Die analytischen Daten sind in Tabelle 1 zusammengefasst.

### Beispiel 10:

Polyester aus 1,2-Cyclohexandicarbonsäureanhydrid, Glycerin und 1,4-Cyclohexandimethanol
1790 g (11,6 mol) Cyclohexan-1,2-dicarbonsäureanhydrid, 588 g (6,39 mol) Glycerin und 460,7 g (3,2 mol) 1,4-Cyclohexandimethanol wurden in dem in Beispiel 9 genannten Reaktionsgefäß vorgelegt und mit Stickstoff begast. Man gab 2,8 g Di-n-Butylzinnoxid zu und erhitzte mit Hilfe eines Ölbads auf eine Innentemperatur von 150°C. Man legte einen verminderten Druck von 100 mbar an, um bei der Reaktion gebildetes Wasser abzutrennen. Die Reaktionsmischung wurde 12 Stunden bei der genannten Temperatur und dem genannten Druck gehalten. Man erhielt den hyperverzweigten Polyester nach dem Abkühlen in Form eines klaren Feststoffes. Die analytischen Daten sind in Tabelle 1 zusammengefasst.

### Beispiel 11:

Polyester aus 1,2-Cyclohexandicarbonsäureanhydrid, Pentaerythrit und 1,4-Cyclohexandimethanol
1480 g (9,6 mol) Cyclohexan-1,2-dicarbonsäureanhydrid, 719 g (5,3 mol) Pentaerythrit und 381 g (2,6 mol) 1,4-Cyclohexandimethanol wurden wurden in dem in Beispiel 9 genannten Reaktionsgefäß vorgelegt und mit Stickstoff begast. Man gab 2,6 g Di-n-Butylzinnoxid zu und erhitzte mit Hilfe eines Ölbads auf eine Innentemperatur von 150°C. Man legte einen verminderten Druck von 200 mbar an, um bei der Reaktion gebildetes Wasser abzutrennen. Die Reaktionsmischung wurde 11 Stunden bei der genannten Temperatur und dem genannten Druck gehalten. Man erhielt nach dem Abkühlen den hyperverzweigten Polyester in Form eines klaren Feststoffes. Die analytischen Daten sind in Tabelle 1 zusammengefasst.

### Beispiel 12:

Polyester aus Adipinsäure, Glycerin und 1,4-Cyclohexandimethanol
233,8 g (1,6 mol) Adipinsäure, 81 g (0,88 mol) Glycerin und 63,5 g (0,44 mol) 1,4-Cyclohexandimethanol wurden in dem in Beispiel 6 genannten Reaktionsgefäß vorgelegt und mit Stickstoff begast. Man gab 0,38 g Di-n-Butylzinnoxid zu und erhitzte mit Hilfe eines Ölbads auf eine Innentemperatur von 130°C. Man legte einen verminderten Druck von 110 mbar an, um bei der Reaktion gebildetes Wasser abzutrennen. Die Reaktionsmischung wurde 8 Stunden bei der genannten Temperatur und dem genannten Druck gehalten. Nach dem Abkühlen erhielt man den hyperverzweigten Polyester als klare, viskose Flüssigkeit. Die analytischen Daten sind in Tabelle 1 zusammengefasst.

### Beispiel 13:

Polyester aus Bernsteinsäure, Trimethylolpropan und 1,4-Cyclohexandimethanol
188,9 g (1,6 mol) Bernsteinsäure, 118,1 g (0,88 mol) Trimethylolpropan und 63,5 g (0,44 mol) 1,4-Cyclohexandimethanol wurden in dem in Beispiel 6 genannten Reaktionsgefäß vorgelegt und mit Stickstoff begast. Man gab 0,37 g Di-n-Butylzinnoxid zu und erhitzte mit Hilfe eines Ölbads auf eine Innentemperatur von 130°C. Man legte einen verminderten Druck von 110 mbar an, um bei der Reaktion gebildetes Wasser abzutrennen. Die Reaktionsmischung wurde 8 Stunden bei der genannten Temperatur und dem genannten Druck gehalten. Man erhielt den hyperverzweigten Polyester nach dem Abkühlen als klare, viskose Flüssigkeit. Die analytischen Daten sind in Tabelle 1 zusammengefasst.

### Beispiel 14:

Polyester aus Bernsteinsäure, Glycerin und 1,4-Cyclohexandimethanol
188,9 g (1,6 mol) Bernsteinsäure, 40,5 g (0,44 mol) Glycerin und 126,9 g (0,88 mol) 1,4-Cyclohexandimethanol wurden in dem in Beispiel 6 genannten Reaktionsgefäß vorgelegt und mit Stickstoff begast. Man gab 0,36 g Di-n-Butylzinnoxid zu und erhitzte mit Hilfe eines Ölbads auf eine Innentemperatur von 130°C. Man legte einen verminderten Druck von 200 mbar an, um bei der Reaktion gebildetes Wasser abzutrennen. Die Reaktionsmischung wurde 5 Stunden bei der genannten Temperatur und dem genannten Druck gehalten. Nach dem Abkühlen erhielt man den Polyester als klare, sehr viskose Flüssigkeit. Die analytischen Daten sind in Tabelle 1 zusammengefasst.

### Beispiel 15:

Polyester aus Bernsteinsäure, Glycerin und 1,4-Cyclohexandimethanol
377,9 g (3,2 mol) Bernsteinsäure, 162,1 g (1,76 mol) Glycerin und 126,9 g (0,88 mol) 1,4-Cyclohexandimethanol wurden in dem in Beispiel 6 genannten Reaktionsgefäß vorgelegt und mit Stickstoff begast. Man gab 0,67 g Di-n-Butylzinnoxid zu und erhitzte mit Hilfe eines Ölbads auf eine Innentemperatur von 140°C. Man legte einen verminderten Druck von 300 mbar an, um bei der Reaktion gebildetes Wasser abzutrennen. Die Reaktionsmischung wurde 3 Stunden bei der genannten Temperatur und dem genannten Druck gehalten. Man erhielt nach dem Abkühlen den Polyester als klare, viskose Flüssigkeit. Die analytischen Daten sind in Tabelle 1 zusammengefasst.

### Beispiel 16:

Polyester aus Bernsteinsäure, Pentaerythrit und 1,4-Cyclohexandimethanol
188,9 g (1,6 mol) Bernsteinsäure, 119,8 g (0,88 mol) Pentaerythrit und 63,45 g (0,44 mol) Cyclohexandimethanol wurden in dem in Beispiel 6 genannten Reaktionsgefäß vorgelegt und mit Stickstoff begast. Man gab 0,37 g Di-n-Butylzinnoxid zu und erhitzte mit Hilfe eines Ölbads auf eine Innentemperatur von 125°C. Man legte einen verminderten Druck von 200 mbar an, um bei der Reaktion gebildetes Wasser abzutrennen. Die Reaktionsmischung wurde 3 Stunden bei der genannten Temperatur und dem genannten Druck gehalten. Nach dem Abkühlen erhielt man den Polyester in Form eines klaren Feststoffes. Die analytischen Daten sind in Tabelle 1 zusammengefasst.

### Beispiel 17:

Polyester aus 1,2-Cyclohexandicarbonsäureanhydrid, einem ethoxylierten Pentaerythrit und 1,4-Cyclohexandimethanol
246,7 g (1,6 mol) Cyclohexan-1,2-dicarbonsäureanhydrid, 80 g (0,1 mol) eines ethoxylierten Pentaerythrits (Polyol PP® 150 von Perstorp) und 126,9 g (0,88 mol) 1,4-Cyclohexandimethanol wurden in dem in Beispiel 6 genannten Reaktionsgefäß vorgelegt und mit Stickstoff begast. Man gab 0,44 g Di-n-Butylzinnoxid zu und erhitzte mit Hilfe eines Ölbads auf eine Innentemperatur von 135°C. Man legte einen verminderten Druck von 150 mbar an, um bei der Reaktion gebildetes Wasser abzutrennen. Die Reaktionsmischung wurde 11 Stunden bei der genannten Temperatur und dem genannten Druck gehalten. Nach dem Abkühlen erhielt man das Produkt in Form eines klaren Feststoffes. Die analytischen Daten sind in Tabelle 1 zusammengefasst.

### Beispiel 18:

Polyester aus 1,2-Cyclohexandicarbonsäureanhydrid, einem ethoxylierten Trimethylolpropan und 1,4-Cyclohexandimethanol
246,7 g (1,6 mol) Cyclohexan-1,2-dicarbonsäureanhydrid, 242 g (0,88 mol) eines ethoxylierten Trimethylolpropans (Lupranol® VP9236, Elastogran GmbH) und 63,45 g (0,44 mol) 1,4-Cyclohexandimethanol wurden in dem in Beispiel 6 genannten Reaktionsgefäß vorgelegt und mit Stickstoff begast. Man gab 0,55 g Di-n-Butylzinnoxid zu und erhitzte mit Hilfe eines Ölbads auf eine Innentemperatur von 150°C. Man legte einen verminderten Druck von 400 mbar an, um bei der Reaktion gebildetes Wasser abzutrennen. Die Reaktionsmischung wurde 11,5 Stunden bei der genannten Temperatur und dem genannten Druck gehalten. Man erhielt nach dem Abkühlen das Produkt in Form eines klaren Feststoffes. Die analytischen Daten sind in Tabelle 1 zusammengefasst.

### Beispiel 19:

Polyester aus Phthalsäureanhydrid, 1,2,4-Benzoltricarbonsäureanhydrid und Ethylenglykol
30,0 g (0,203 mol) Phthalsäureanhydrid, 77,8 g (0,405 mol) 1,2,4-Benzoltricarbonsäureanhydrid und 45,7 g (0,737 mol) Ethylenglykol wurden in dem in Beispiel 1 genannten Reaktionsgefäß vorgelegt und mit Stickstoff begast. Man gab 0,1 g Di-n-Butylzinnoxid zu und erhitzte mit Hilfe eines Ölbads auf eine Innentemperatur von 120°C. Man legte einen verminderten Druck von 20 mbar an, um bei der Reaktion gebildetes Wasser abzutrennen. Die Reaktionsmischung wurde 7,5 Stunden bei der genannten Temperatur und dem genannten Druck gehalten. Man erhielt den hyperverzweigten Polyester in Form eines klaren Feststoffes. Die analytischen Daten sind in Tabelle 1 zusammengefasst.

### Beispiel 20:

Polyester aus Phthalsäureanhydrid, 1,2,4-Benzoltricarbonsäureanhydrid und Ethylenglykol
60,0 g (0,405 mol) Phthalsäureanhydrid, 38,9 g (0,203 mol) 1,2,4-Benzoltricarbonsäureanhydrid und 45,7 g (0,737 mol) Ethylenglykol wurden in dem in Beispiel 1 genannten Reaktionsgefäß vorgelegt und mit Stickstoff begast. Man gab 0,1 g Di-n-Butylzinnoxid zu und erhitzte mit Hilfe eines Ölbads auf eine Innentemperatur von 120°C. Man legte einen verminderten Druck von 20 mbar an, um bei der Reaktion gebildetes Wasser abzutrennen. Die Reaktionsmischung wurde 6 Stunden bei der genannten
Temperatur und dem genannten Druck gehalten. Man erhielt den hyperverzweigten Polyester in Form eines klaren Feststoffes. Die analytischen Daten sind in Tabelle 1 zusammengefasst.

**Tabelle 1: Erfindungsgemäße Polyester**

| Beispiel Nr. | M_{w}/ Mₙ (GPC) | Glasübergangs-temperatur (T_{g},°C) | Säurezahl (mg KOH/g) | OH-Zahl (mg KOH/g) |
|---|---|---|---|---|
| 1 | 4050 /2110 | 54,0 | 89 | 124 |
| 2 | 5220 / 1750 | -16,9 | 136 | 269 |
| 3 | 15130/2830 | -21,6 | 101 | 223 |
| 4 | 4980 / 1840 | 54,0 | 58 | n.b |
| 5 | 3080 / 1490 | 55,0 | 77 | n.b |
| 6 | 11900 / 3020* | n.b. | 18 | n.b |
| 7 | 13190/3020 | -25,0 | 92 | n.b |
| 8 | 10480/2520 | -19,4 | 131 | 317 |
| 9 | 1360/1040 | n.b. | 137 | 78 |
| 10 | 2580 / 1320 | 28,3 | 160 | 187 |
| 11 | 3330 / 1410 | 51,0 | 92 | 149 |
| 12 | 12640/2940 | -24,1 | 99 | 154 |
| 13 | 18030 / 3170 | -26,0 | 87 | 144 |
| 14 | 2520/960 | -10,0 | 136 | 125 |
| 15 | 1360 / 640 | -23,3 | 196 | 257 |
| 16 | 2130 / 980 | 1,9 | 118 | 333 |
| 17 | 1840 / 700 | 5,0 | 168 | n.b |
| 18 | 1700 / 740 | n.b. | 37 | n.b |
| 19 | 1830 / 1290* | 16,9 | 220 | 152 |
| 20 | 1840 / 1290* | 1,6 | 145 | 164 |

| | | | | |
|---|---|---|---|---|
| n.b. = nicht bestimmt | | | | |

### Analytik der erfindungsgemäßen Produkte:

Die Polyester wurden per Gelpermeationschromatographie mit einem Refraktometer als Detektor analysiert. Als mobile Phase wurde Tetrahydrofuran, bzw. bei den mit * gekennzeichneten Molmassen Hexafluorisopropanol verwendet, als Standard zur Bestimmung des Molekulargewichts wurde Polymethylmethacrylat (PMMA) eingesetzt.

Die Bestimmung der Glasübergangstemperaturen erfolgte mittels Differential Scanning Calorimetry (DSC), ausgewertet wurde die zweite Aufheizkurve.

Die Bestimmung der Säurezahl und der OH-Zahl erfolgte indieser Schrift nach DIN 53240, Teil 2.

### Beispiele 21 - 31:

Einsatz der erfindungsgemäßen Polyester in Lackformulierungen

### Herstellung der Lacke:

Alle Lackmischungen wurden mit einem stöchiometrischen Verhältnis von Isocyanatgruppen zu Alkoholgruppen (Index 100) bei Raumtemperatur angesetzt.

Die Viskosität wurde auf eine Auslaufzeit von 20 s gemäß ISO 2431 und EN 535 im DIN 4 Becher eingestellt. Die Lacke wurden bei Raumtemperatur mit einem Kastenrakel 180 µm nass auf ein Blech als Substrat aufgerakelt. Die Lackschichtdicke nach Trocknung betrug im Mittel ca. 40 µm.

Als Vergleichsbeispiele wurden Lacke betrachtet, die aus kommerziellen Rohstoffen erhalten wurden.

Tabelle 2 gibt einen Überblick über die Zusammensetzung der erfindungsgemäßen Beispiele und der Vergleichs-Lacke.

### Prüfmethoden:

Die Untersuchungen der Lackeigenschaften erfolgten nach 24 Stunden Lagerung der lackierten Bleche in einem Klimaraum bei 23 °C und 50 % relativer Luftfeuchte.

Alle untersuchten Lacke waren nach Aushärtung bei Raumtemperatur, bei 80 °C und bei 130 °C klar und transparent. Alle untersuchten Lacke zeigten nach Aushärtung bei über einen Zeitraum von 30 min bei 130 °C im Aceton-Doppelhub-Test mindestens 100 Doppelhübe.

Auslaufzeit: Gemessen auf Basis von ISO 2431 und EN 535 im DIN 4 Becher bei Raumtemperatur. Angegeben ist die Zeitspanne vom Beginn des Ausfließens bis zum Abreißen des Flüssigkeitsfadens in Sekunden.

Aceton-Doppelhub-Test: Mit einem Aceton-getränkten Wattebausch wurde so lang per Hand mit Doppelhüben gerieben bis die Lackschicht bis auf das Blech durchgerieben war. Die Anzahl der dafür nötigen Doppelhübe ist angegeben. Bei hundert Hüben wurde der Versuch abgebrochen.

Erichsen-Tiefung: Tiefungsprüfung nach DIN EN ISO 1520 in mm Tiefung.

Etchtest mit Schwefelsäure: Mit einer Pipette wurden 25 µm-Tropfen auf ein Gradientenofenblech gegeben und dieses im Gradientenofen 30 Minuten bei 30-75 °C geheizt. Das Blech wurde danach mit Wasser abgewaschen und getrocknet. Angegeben ist die niedrigste Temperatur bei der mit dem Auge noch eine Anätzung festzustellen war.

Haftung mit Gitterschnitt nach DIN 53151, die Note 0 bezeichnet die Bestnote, die Note 5 die schlechteste Note. Siehe dazu auch Goldberg und Streitberger, BASF Handbuch Lackiertechnik, Vincentz-Verlag Hannover, 2002, Seite 395.

Nichtflüchiger Anteil (nfA): 1 g der Lackmischung wurde eine Stunde bei 125 °C im Umluftofen getrocknet und das Restgewicht bezogen auf den Anfangswert (=100%) bestimmt.

Pendeldämpfung nach König in Anzahl Schwingungen auf Grundlage von DIN EN ISO 1522.

Scheuertest, Kratzfestigkeit im Scotch-Brite-Test: an einem 500 g Schlosserhammer wurde am Kopf mit doppelseitigem Klebeband ein Faservlies (Scotchbrite®, 7448 Typ S ultrafine) angebracht. Der Hammer wurde mit zwei Fingern am Stielende gehalten und mit gleichmäßigen Doppelhüben ohne Verkanten und ohne zusätzliche Druckaufbringung auf einer Linie über den Lackfilm vor- und zurückbewegt. Nach 50 Doppelhüben, anschließender Temperung für 60 Minuten im Umluftofen bei 60 °C (Reflow) und Lagerung für 4 h bei 23°C und 50% relativer Luftfeuchte wurde der Glanz quer zur Scheuer-Richtung bestimmt. Das Faservlies wurde jeweils nach dem Test gegen ein neues Vlies ausgetauscht.

Glanzmessung: Glanzmessgerät Mikro TRI-Gloss bei 60° Einfallwinkel.

### Ergebnis der Lackuntersuchungen bei der Härtungstemperatur 130°C

Allgemein führt der Einsatz der hyperverzweigten Polyester zu einer Verbesserung der Härte bei vergleichbarer Elastizität und Haftung im Gitterschnitt und zu einer Verbesserung der Kratzfestigkeit ohne Abfall der Chemikalienbeständigkeit (siehe Tabelle 3).

Im direkten Vergleich des Vergleichsbeispiels 21, einem Lacksystem, dass sich durch sehr gute Flexibilität (Erichsentiefung) auszeichnet, mit dem Beispiel 22 wird bei Austausch des Polyacrylatpolyols gegen einen erfindungsgemäßen hyperverzweigten Polyester eine deutlich höhere Härte bei verbesserter Elastizität erhalten. Ebenso verbessert wird die Kratzbeständigkeit und der Reflow nach 50 Doppelhüben.

Durch Ersatz des HDI-basierenden Polyisocyanats gegen das härtere, IPDI-basierende Isocyanat wird bei vergleichbarer Elastizität und Haftung im Gitterschnitt die Härte deutlich erhöht, ebenso wird eine verbesserte Kratzbeständigkeit eine verbesserte Säurebeständigkeit gefunden (Beispiel 23). Durch Zusatz eines hyperverzweigten Polyisocyanats als Vernetzer wird ebenfalls nochmals die Kratzbeständigkeit verbessert (Beispiel 24)

In den Beispielen 25 (Vgl.) und 26 wird deutlich, dass auch in Bindemittelgemischen durch Austausch einer Acrylatkomponente gegen einen erfindungsgemäßen Polyester deutliche Steigerungen der Lackperformance im Hinblick auf Härte, Flexibilität, Chemikalienresistenz und Kratzbeständigkeit zu erreichen sind.

Die Beispiele 29 - 31 zeigen, dass gegenüber konventionellen Lacksystemen auf Polyesterbasis (Vergleichsbeispiel 28) eine wesentlich verbesserte Performance im Hinblick auf Härte, Flexibilität und Haftung erreicht werden kann. Auch bei der Kratzbeständigkeit sind deutliche Vorteile, selbst gegenüber einem Acrylat-basierenden System (Vergleichbeispiel 27) zu erkennen.

### Ergebnis der Lackuntersuchungen bei der Härtungstemperatur 80°C

Die Systeme mit den erfindungsgemäßen Polyestern als Bindemittel zeigen in allen erfindungsgemäßen Beispielen bis auf Beispiel 22 schon bei 30 min Härtung bei 80 °C im Aceton-Doppelhub-Test einen Wert von 100. Die Säurebeständigkeit ist gegenüber den Vergleichsbeispielen durchweg besser, ebenfalls ist die Kratzbeständigkeit signifikant verbessert.

**Tabelle 2: Zusammensetzung der Lacksysteme, Einwaagen in g**

| **Beispiel** | **21 (Vgl.)** | **22** | **23** | **24** | **25 (Vgl.)** | **26** | **27 (Vgl.)** | **28 (Vgl.)** | **29** | **30** | **31** |
|---|---|---|---|---|---|---|---|---|---|---|---|
| **Macrynal SM 636170BAC** | 93,3 | | | 31,1 | 32,0 | | 71,4 | | 35,7 | | |
| **Macrynal SM 600/60XBAC** | | | | | 48,0 | 48,0 | | | | | |
| **Desmophen 680 BA** | | | | | | | | 85,7 | | | |
| **Polyester aus Beispiel 1, 50% in Butylacetat** | | 143,3 | 80,8 | 47,5 | | | | | | | |
| **Polyester aus Beispiel 11, 60% in Butylacetat** | | | | | | 33,8 | | | 37,8 | 89,7 | |
| **Polyester aus Beispiel 9, 60% in Butylacetat** | | | | | | | | | | | 85,6 |
| **Basonat HI 100** | 30,0 | 30,0 | | 10,0 | | | | | | | |
| **Vestanat T 1890** | | | | | 36,8 | 36,8 | 42,1 | 27,3 | 42,1 | 50,0 | 25,0 |
| **Basonat HYB** | | | 50,0 | 29,4 | | | | | | | |
| **Butylacetat** | 75,0 | 38,5 | 74,4 | 65,0 | 49,0 | 41,0 | 53,0 | 36,0 | 38,0 | 50,0 | 25,0 |
| **nfA [%]** | 51,3 | 48,0 | 34,3 | 40,0 | 46,4 | 46,9 | 47,4 | 53,1 | 50,2 | 46,8 | 50,8 |
| **Auslaufzeit [s]** | 20,0 | 20,3 | 20,0 | 20,3 | 19,8 | 20,0 | 20,2 | 20,1 | 19,7 | 20,0 | 19,6 |

**Tabelle 3: Lackuntersuchungen nach Aushärtung bei 130°C über 30 min**

| **Beispiel** | **21 (Vgl.)** | **22** | **23** | **24** | **25 (Vgl.)** | **26** | **27 (Vgl.)** | **28 (Vgl.)** | **29** | **30** | **31** |
|---|---|---|---|---|---|---|---|---|---|---|---|
| **Pendelhärte** | 148 | 156 | 162 | 156 | 146 | 151 | 149 | 136 | 149 | 159 | 166 |
| **Erichsentiefung [mm]** | 8,6 | 8,8 | 8,2 | 7,8 | 4,8 | 6,0 | 1,9 | 0,5 | 3,8 | 0,6 | 0,1 |
| **Gitterschnitt [Note]** | 0,5 | 0 | 0 | 0 | 4 | 4,5 | 5 | 5 | 2 | 3 | 5 |
| **Etch-Test Schwefelsäure [°C]** | 49 | 46 | 54 | 52 | 51 | 54,5 | 64,5 | 63,5 | 68 | 65,5 | 57 |
| **Scheuertest 50 DH Glanz 60°** | 19,5 | 32,6 | 30,4 | 34,2 | 19,2 | 36,1 | 27,0 | 13,5 | 41,1 | 41,4 | 31,0 |
| **Scheuertest 50 DH, Reflow Glanz 60°** | 31,4 | 38,3 | 34,9 | 38,6 | 19,6 | 38,7 | 28,8 | 15,7 | 43,9 | 43,1 | 31,2 |

**Tabelle 4: Lackuntersuchungen nach Aushärtung bei 80°C über 30 min**

| **Beispiel** | **21 (Vgl.)** | **22** | **23** | **24** | **25 (Vgl.)** | **26** | **27 (Vgl.)** | **28 (Vgl.)** | **29** | **30** | **31** |
|---|---|---|---|---|---|---|---|---|---|---|---|
| **Pendelhärte** | 135 | 99 | 138 | 151 | 144 | 142 | 144 | 139 | 144 | 137 | 140 |
| **Erichsentiefung [mm]** | 8,9 | >9,0 | 9,0 | 8,7 | 0,5 | 6,7 | 0,1 | 0,3 | 0,5 | 0,1 | 0,2 |
| **Gitterschnitt [Note]** | 0 | 2 | 5 | 0,5 | 5 | 5 | 5 | 5 | 5 | 5 | 5 |
| **Aceton-Doppelhub-Test [Hübe]** | 30 | 88 | 100 | 100 | 18 | 100 | 16 | 64 | 100 | 100 | 100 |
| **Etch-Test Schwefelsäure [°C]** | 43,0 | 44,0 | | | 44,0 | 46,0 | 49,5 | 62,5 | 58,5 | 54,0 | 48,5 |
| **Scheuertest 50 DH Glanz 60°** | 6,3 | 26,8 | 22,6 | 20,2 | | | | | | | |
| **Scheuertest 50 DH, Reflow Glanz 60°** | 6,6 | 26,8 | 26,6 | 23,8 | | | | | | | |

Verwendete Einsatzstoffe:
- Macrynal® SM 636/70 BAC, Fa. UCB, Polyacrylatpolyol, 70 % in Butylacetat, OH-Zahl ca. 135 mg KOH/g.
- Macrynal® SM 600/60 XBAC, Fa. UCB, Polyacrylatpolyol, 60 % in Xylol/Butylacetat, OH-Zahl ca. 100 mg KOH/g.
- Desmophen® 680 BA, Bayer AG, verzweigtes Polyesterol, 70 % in Butylacetat, OH-Zahl ca. 73 mg KOH/g
- Basonat^{®} HI 100, BASF AG, Polyisocyanat (Isocyanurat) auf Basis Hexamethylendiisocyanat, NCO-Gehalt ca. 22,0 %.
- Vestanat^{®} T 1890, Degussa AG, Polyisocyanat (Isocyanurat) auf Basis Isophorondiisocyanat, 70 % in Butylacetat/Solvesso 100, NCO-Gehalt ca. 12,0 %.
- Basonat^{®} HYB, BASF AG, hyperverzweigtes Polyisocyanat, 60 % in Butylacetat. NCO-Gehalt ca. 7,2 %.

### Druckfarben mit den erfindungsgemäßen hoch- oder hyperverzweigten Polyestern

Die Qualität der Druckfarben wurde anhand der Haftfestigkeit auf verschiedenen Bedruckstoffen bestimmt.

### Messmethode Tesafestigkeit

Das Prüfverfahren "Tesafestigkeit" dient zur Bestimmung der Haftung eines Druckfarbenfilms auf dem Bedruckstoff.

### Herstellen der Proben

Die auf Druckviskosität verdünnte Farbe wird auf dem vorgeschriebenen Bedruckstoff angedruckt oder mit einem 6 µm-Rakel aufgezogen.

### Durchführung der Prüfung

Ein Tesa®-Bandstreifen (Klebeband mit 19 mm Breite (Artikel BDF 4104, Beiersdorf AG) wird auf den Druckfarbenfilm aufgeklebt, gleichmäßig angedrückt und nach 10 Sekunden wieder abgerissen. Dieser Vorgang wird auf derselben Stelle des Prüflings jeweils mit einem neuen Tesabandstreifen 4 mal wiederholt. Jeder Tesastreifen wird nacheinander auf ein weißes Papier, bei weißen Farben auf Schwarzpapier aufgeklebt. Die Prüfung erfolgt sofort nach Applikation der Farbe.

### Auswertung

Es erfolgt eine visuelle Prüfung der Oberfläche des Prüflings auf Beschädigung. Die Benotung erfolgt von 1 (sehr schlecht) bis 5 (sehr gut).

Für die Beispiele wurden folgende Rezepturen (Gew. Teile) gewählt:

**Standard-Rezeptur A (Vergleich)**

| | |
|---|---|
| 70,0 | Pigment Präparation (BASF Drucksysteme) |
| 8,0 | Nitrocellulose (Wolf) |
| 1,0 | Oleamid (Croda) |
| 0,5 | PE-Wachse (BASF AG) |
| 2,0 | Dibutylphthalat (Brenntag) |
| 12,5 | Ethanol |
| 6,0 | konventionelles Polyurethan PUR 7317 (BASF) |

**Rezeptur 1 (erfindungsgemäß)**

| | |
|---|---|
| 70,0 | Pigment Präparation (BASF Drucksysteme) |
| 8,0 | Nitrocellulose (Wolf) |
| 1,0 | Oleamid (Croda) |
| 0,5 | PE-Wachse (BASF AG) |
| 2,0 | Dibutylphthalat (Brenntag) |
| 12,5 | Ethanol |
| 6,0 | Polymer aus Beispiel 12 (Tabelle 1), 75%ig gelöst in Ethanol |

**Tabelle 5: Standard-Bindemittel im Vergleich zu Polymer aus Beispiel 12 (Tabelle 1)**

| Beispiel | System | Bedruckstoff (Folie) | |
|---|---|---|---|
| | | Polypropylen | Polyamid Emblem 1500 |
| 32 (Vergleich) | Standard-Rezeptur A | 1 | 2 |
| 33 (erfindungsgemäß | Rezeptur 1 | 4 | 5 |

### Bestimmung der Verbundfestigkeit von Laminaten:

Zur Herstellung von Verbundverpackungen werden bedruckte Polymerfolien, beispielsweise Polyamid-, Polyethylen- oder Polypropylenfolien, mit anderen Folientypen, wie beispielsweise Metallfolien oder aber auch Kunstofffolien, durch Laminierung verbunden. Wichtige Anwendungseigenschaften derartiger Laminate für den Einsatz als Verbundverpackung sind neben der Festigkeit des Verbundes bei normaler Lagerung auch die Festigkeit des Verbundes unter verschärften Bedingungen, wie beispielsweise beim Erhitzen oder Sterilisieren.

Die Qualität der erfindungsgemäßen Druckfarben wurde durch Bestimmung der Verbundfestigkeit beurteilt. Unter Verbundfestigkeit versteht man die Bestimmung der Verbundhaftung zwischen zwei durch Kaschierung oder Extrusion verbundenen Filmen oder Metallfolien.

### Mess- und Prüfgeräte:

Zugfestigkeitsprüfgerät Fa. Zwick
Stanzwerkzeug (Breite: 15mm)

### Herstellung der Proben:

Vom zu testenden Material müssen mindestens je 2 Streifen (Breite: 15mm) längs und quer zur Folienbahn zugeschnitten werden. Zur Trennung des Verbundes werden die Enden der ausgestanzten Streifen können in entsprechendes Lösungsmittel (z.B. 2-Butanon) getaucht werden, bis sich die Materialien voneinander lösen. Danach muß das Muster wieder sorgfältig getrocknet werden.

### Durchführung der Prüfung:

Die delaminierten Enden der Prüflinge werden in den Zugfestigkeitsprüfer eingespannt. Der weniger dehnfähige Film sollte in die obere Klemme eingelegt werden. Beim Anlauf der Maschine sollte das Ende des Musters im rechten Winkel zur Zugrichtung gehalten werden, wodurch ein konstanter Zug gewährleistet wird. Die Abzugsgeschwindigkeit beträgt 100 mm/min, der Abzugswinkel der getrennten Filme zum nichtgetrennten Komplex beträgt 90°.

### Auswertung:

Abgelesen wird der Verbundwert als Mittelwert, Angabe in N / 15mm.

### Herstellung der Proben:

Die auf Druckviskosität verdünnte Farbe wird auf dem vorgeschriebenen Bedruckstoff Polyamid (Emblem 1500) angedruckt oder mit einem 6 µm-Rakel aufgezogen. Parallel dazu wird die Polyethylen-Kaschierfolie mit der Kleber-Härter-Mischung Morfree A415 (Kleber) und C90 (Härter, Rohm & Haas), Gewichts-Mischungsverhältnis 100:40, so beschichtet, dass eine Filmdicke von etwa 6 µm (entspricht etwa 2,5 g / m²) resultiert. Beide Folien werden anschließend so verpresst, dass die Druckfarbe und der Kleber in Kontakt kommen. Nach dem Verpressen werden die Verbundfolien 5 Tage bei 60°C gelagert.

Es wurden folgende Rezepturen (Gew. Teile) für die Beispiele gewählt:

**Standard-Rezeptur B (Vergleich):**

| | |
|---|---|
| 13,0 | Pigment Heliogen® Blau D 7080 (BASF AG) |
| 15,0 | Bindemittel (Polyvinylbutyral) |
| 3,0 | Additiv (Polyethylenimin, BASF AG) |
| 69,0 | Ethanol |

**Rezeptur 1 (erfindungsgemäß)**

| | |
|---|---|
| 70,0 | Pigment Präparation (BASF Drucksysteme) |
| 8,0 | Nitrocellulose (Wolf) |
| 1,0 | Oleamid (Croda) |
| 0,5 | PE-Wachse (BASF AG) |
| 2,0 | Dibutylphthalat (Brenntag) |
| 12,5 | Ethanol |
| 6,0 | Polymer aus Beispiel 12 (Tabelle 1), 75%ig gelöst in Ethanol |

**Beispiel 34: Verbundwerte für das Laminat aus Polyamid und Polyethylen:**

| | Verbundwert (N/15mm): |
|---|---|
| Standard-System B (Vergleich): | 3,93 |
| Rezeptur 1 (erfindungsgemäß) | 7,30 |

## Patentansprüche

1. Hochfunktionelle, hoch- oder hyperverzweigte Polyester erhältlich durch Umsetzung
mindestens einer aliphatischen, cycloaliphatischen, araliphatischen oder aromatischen Dicarbonsäure (A₂) oder von Derivaten derselben und
mindestens einem zweiwertigen aliphatischen, cycloaliphatischen, araliphatischen oder aromatischen Alkohol (B₂), welcher 2 OH-Gruppen jedoch keine weiteren Funktionalitäten aufweist, mit entweder
a) mindestens einem x-wertigen aliphatischen, cycloaliphatischen, araliphatischen oder aromatischen Alkohol (Cₓ), der mehr als zwei OH-Gruppen aufweist und x eine Zahl größer 2 darstellt,
oder
b) mindestens einer aliphatischen, cycloaliphatischen, araliphatischen oder aromatischen Carbonsäure (D_{y}) oder deren Derivat, die mehr als zwei Säuregruppen aufweist und y eine Zahl größer 2 darstellt,
jeweils gegebenenfalls in Gegenwart weitererfunktionalisierter Bausteine E und
c) gegebenenfalls anschließend Umsetzung mit einer Monocarbonsäure F wobei das MoleKulargewicht des Polyesters Mₙ mindestens 500 g/mol und
die Polydispersität M_{w}/Mₙ von 1,2 - 50 betragen
und man das Verhältnis der reaktiven Gruppen aller Komponenten im Reaktionsgemisch so wählt, dass man ein molares Verhältnis von Hydroxylgruppen zu Carboxylgruppen oder deren Derivaten von 5:1 bis 1:5 einstellt, und man die Reaktion in Gegenwart von sauren Katalysatoren durchführt,
wobei bei Variante a) die Glasübergangstemperatur T_{g} der Polyester von -40°C bis 100 °C beträgt; und wobei bei Variante a) der Verzweigungsgrad 10 bis 99.9% beträgt.

2. Verfahren zur Herstellung von Polyestern gemäß Anspruch 1, **dadurch gekennzeichnet, daß** man
mindestens eine aliphatische, cycloaliphatische, araliphatische oder aromatische Dicarbonsäure (A₂) oder von Derivaten derselben und
mindestens einen zweiwertigen aliphatischen, cycloaliphatischen, araliphatischen oder aromatischen Alkohol (B₂), welcher 2 OH-Gruppen aufweist, mit entweder
a) mindestens einem x-wertigen aliphatischen, cycloaliphatischen, araliphatischen oder aromatischen Alkohol (Cₖ), der mehr als zwei OH-Gruppen aufweist und x eine Zahl größer 2 darstellt,
oder
b) mindestens einer aliphatischen, cycloaliphatischen, araliphatischen oder aromatischen Carbonsäure (D_{y}) oder deren Derivat, die mehr als zwei Säuregruppen aufweist und y eine Zahl größer 2 darstellt,
jeweils gegebenenfalls in Gegenwart weiterer funktionalisierter Bausteine E und
c) gegebenenfalls anschließend Umsetzung mit einer Monocarbonsäure F
umsetzt,
wobei bei Variante a) die Glasübergangstemperatur T_{g} der Polyester von -40°C bis 100 °C beträgt; und wobei bei Variante a) der Verzweigungsgrad 10 bis 99.9% beträgt.

3. Polyester und Verfahren gemäß einem der vorstehenden Ansprüche, **dadurch gekennzeichnet, daß** man das Verhältnis der reaktiven Gruppen im Reaktionsgemisch so wählt, dass man ein molares Verhältnis von Hydroxylgruppen zu Carboxylgruppen oder deren Derivaten von 4:1 bis 1:4 einstellt.

4. Polyester und Verfahren gemäß einem der vorstehenden Ansprüche, **dadurch gekennzeichnet, daß** man das Verhältnis der reaktiven Gruppen im Reaktionsgemisch so wählt, dass man ein molares Verhältnis von Hydroxylgruppen zu Carboxylgruppen oder deren Derivaten von 3:1 bis 1:3 einstellt.

5. Polyester und Verfahren gemäß einem der vorstehenden Ansprüche, **dadurch gekennzeichnet, daß** es sich bei der Monocarbonsäure F um eine gesättigte Monocarbonsäure mit 8 bis 20 Kohlenstoffatomen handelt.

6. Polyester und Verfahren gemäß einem der Ansprüche 1 bis 4, **dadurch gekennzeichnet, daß** die Monocarbonsäure F ausgewählt ist aus der Gruppe Acrylsäure, Methacrylsäure, Ethacrylsäure, α-Chloracrylsäure, Maleinsäure, Fumarsäure, Itaconsäure, Crotonsäure, Citraconsäure, Mesaconsäure und Glutaconsäure.

7. Polyester und Verfahren gemäß einem der vorstehenden Ansprüche mit einer Summe von Säurezahl und OH-Zahl gemäß DIN 53240, Teil 2 von bis zu 500 mg KOH/g.

8. Verwendung von Polyestern gemäß einem der Ansprüche 1 bis 7 mit einer Glasübergangstemperatur T_{g} von -40 °C bis 60 °C in Druckfarben.

9. Verwendung von Polyestern gemäß einem der Ansprüche 1 bis 7 als Thixotropiermittel, als Bausteine zur Herstellung von Polyadditions- oder Polykondensationspolymeren in Klebstoffen, Dichtmassen, Giesselastomeren oder Schaumstoffen.

10. Druckfarben, Klebstoffe, Beschichtungen, Schaumstoffe, Überzüge und Lacke, enthaltend mindestens einen hochfunktionellen hoch- und hyperverzweigten Polyester gemäß einem der Ansprüche 1 oder 3 bis 7 oder aus einem hochfunktionellen, hoch- und hyperverzweigten Polyestern gemäß einem der Ansprüche 1 oder 3 bis 7 hergestellte Polyadditions- oder Polykondensationsprodukte.

## Claims

1. A high-functionality highly branched or hyperbranched polyester obtainable by reacting
at least one aliphatic, cycloaliphatic, araliphatic or aromatic dicarboxylic acid (A₂) or derivatives thereof and
at least one divalent aliphatic, cycloaliphatic, araliphatic or aromatic alcohol (B₂), containing 2 OH groups but no further functionalities, with either
a) at least one x-valent aliphatic, cycloaliphatic, araliphatic or aromatic alcohol (Cₓ) containing more than two OH groups, x being a number greater than 2, or
b) at least one aliphatic, cycloaliphatic, araliphatic or aromatic carboxylic acid (D_{y}) or derivative thereof containing more than two acid groups, y being a number greater than 2,
in each case optionally in the presence of further functionalized building blocks E and
c) subsequently optionally reacting the product with a monocarboxylic acid F, the molecular weight of the polyester, Mₙ, being at least 500 g/mol and the polydispersity M_{w}/Mₙ being 1.2-50
and the ratio of the reactive groups of all of the components in the reaction mixture being chosen so as to set a molar ratio of hydroxyl groups to carboxyl groups or derivatives thereof of from 5:1 to 1:5, and the reaction being carried out in the presence of acidic catalysts,
in variant a) the glass transition temperature T_{g} of the polyesters being from -40°C to 100°C; and in variant (a) the degree of branching being from 10% to 99.9%.

2. A process for preparing a polyester according to claim 1, which comprises reacting
at least one aliphatic, cycloaliphatic, araliphatic or aromatic dicarboxylic acid (A₂) or derivatives thereof and
at least one divalent aliphatic, cycloaliphatic, araliphatic or aromatic alcohol (B₂), containing 2 OH groups, with
either
a) at least one x-valent aliphatic, cycloaliphatic, araliphatic or aromatic alcohol (Cₓ) containing more than two OH groups, x being a number greater than 2,
or
b) at least one aliphatic, cycloaliphatic, araliphatic or aromatic carboxylic acid (D_{y}) or derivative thereof containing more than two acid groups, y being a number greater than 2,
in each case optionally in the presence of further functionalized units E and c) subsequently optionally reacting the product with a monocarboxylic acid F, in variant a) the glass transition temperature T_{g} of the polyesters being from -40°C to 100°C; and in variant (a) the degree of branching being from 10% to 99.9%.

3. The polyester or process according to either of the preceding claims, wherein the ratio of the reactive groups in the reaction mixture is chosen so as to set a molar ratio of hydroxyl groups to carboxyl groups or derivatives thereof of from 4:1 to 1:4.

4. The polyester or process according to any one of the preceding claims, wherein the ratio of the reactive groups in the reaction mixture is chosen so as to set a molar ratio of hydroxyl groups to carboxyl groups or derivatives thereof of from 3:1 to 1:3.

5. The polyester or process according to any one of the preceding claims, wherein the monocarboxylic acid F is a saturated monocarboxylic acid having from 8 to 20 carbon atoms.

6. The polyester or process according to any one of claims 1 to 4, wherein the monocarboxylic acid F is selected from the group consisting of acrylic acid, methacrylic acid, ethacrylic acid, α-chloroacrylic acid, maleic acid, fumaric acid, itaconic acid, crotonic acid, citraconic acid, mesaconic acid and glutaconic acid.

7. The polyester or process according to any one of the preceding claims with a sum of acid number and OH number according to DIN 53240, part 2 of up to 500 mg KOH/g.

8. The use of a polyester according to any one of claims 1 to 7 having a glass transition temperature T_{g} of from -40°C to 60°C in a printing ink.

9. The use of a polyester according to any one of claims 1 to 7 as a thixotropic agent or as a building block for preparing polyaddition or polycondensation polymers in adhesives, sealants, casting elastomers or foams.

10. A printing ink, adhesive, coating, foam, covering or paint comprising at least one high-functionality highly branched or hyperbranched polyester according to any one of claims 1 and 3 to 7 or comprising a polyaddition or polycondensation product prepared from a high-functionality highly branched or hyperbranched polyester according to any one of claims 1 and 3 to 7.

## Revendications

1. Polyesters hautement fonctionnels, hautement ou hyper-ramifiés, pouvant être obtenus par mise en réaction
d'au moins un acide dicarboxylique aliphatique, cycloaliphatique, araliphatique ou aromatique (A₂) ou de dérivés d'un tel acide et
d'au moins un alcool dihydrique aliphatique, cycloaliphatique, araliphatique ou aromatique (B₂), qui comporte 2 groupes OH mais ne comporte pas d'autres fonctionnalités, avec
soit
a) au moins un alcool x-hydrique aliphatique, cycloaliphatique, araliphatique ou aromatique (Cₓ) qui comporte plus de deux groupes OH et x représente un nombre supérieur à 2,
soit
b) au moins un acide carboxylique aliphatique, cycloaliphatique, araliphatique ou aromatique (D_{y}), ou un dérivé d'un tel acide, qui comporte plus de deux groupes acides et y représente un nombre supérieur à 2,
chaque fois éventuellement en présence d'autres composants fonctionnalisés E et
c) éventuellement ensuite mise en réaction avec un acide monocarboxylique F,
la masse moléculaire du polyester Mₙ étant d'au moins 500 g/mole et la polydispersité M_{w}/Mₙ allant de 1,2 à 50 et
on choisit le rapport des groupes réactifs de tous les composants dans le mélange réactionnel de manière à ajuster un rapport molaire de 5:1 à 1:5 des groupes hydroxy aux groupes carboxy ou de leurs dérivés, et on effectue la réaction en présence de catalyseurs acides, dans la variante a) la température de transition vitreuse Tg des polyesters valant de -40 °C à 100°C ; et dans la variante a) le degré de ramification valant de 10 à 99,9%.

2. Procédé pour la préparation de polyesters selon la revendication 1, **caractérisé en ce qu'**on fait réagir au moins un acide dicarboxylique aliphatique, cycloaliphatique, araliphatique ou aromatique (A₂) ou des dérivés d'un tel acide et
au moins un alcool dihydrique aliphatique, cycloaliphatique, araliphatique ou aromatique (B₂), qui comporte 2 groupes OH, avec
soit
a) au moins un alcool x-hydrique aliphatique, cycloaliphatique, araliphatique ou aromatique (Cₓ) qui comporte plus de deux groupes OH et x représente un nombre supérieur à 2,
soit
b) au moins un acide carboxylique aliphatique, cycloaliphatique, araliphatique ou aromatique (D_{y}), ou un dérivé d'un tel acide, qui comporte plus de deux groupes acides et y représente un nombre supérieur à 2,
chaque fois éventuellement en présence d'autres composants fonctionnalisés E et
c) éventuellement on fait ensuite réagir avec un acide monocarboxylique F,
dans la variante a) la température de transition vitreuse Tg des polyesters valant de -40 °C à 100°C ; et dans la variante a) le degré de ramification valant de 10 à 99,9%.

3. Polyester et procédé selon l'une quelconque des revendications précédentes, **caractérisés en ce qu'**on choisit le rapport des groupes réactifs dans le mélange réactionnel de manière à ajuster un rapport molaire de 4:1 à 1:4 des groupes hydroxy aux groupes carboxy ou de leurs dérivés.

4. Polyester et procédé selon l'une quelconque des revendications précédentes, **caractérisés en ce qu'**on choisit le rapport des groupes réactifs dans le mélange réactionnel de manière à ajuster un rapport molaire de 3:1 à 1:3 des groupes hydroxy aux groupes carboxy ou de leurs dérivés.

5. Polyester et procédé selon l'une quelconque des revendications précédentes, **caractérisés en ce que** l'acide monocarboxylique F consiste en un acide monocarboxylique saturé ayant de 8 à 20 atomes de carbone.

6. Polyester et procédé selon l'une quelconque des revendications précédentes, **caractérisés en ce que** l'acide monocarboxylique F est choisi dans le groupe constitué par l'acide acrylique, l'acide méthacrylique, l'acide éthacrylique, l'acide α-chloracrylique, l'acide maléique, l'acide fumarique, l'acide itaconique, l'acide crotonique, l'acide citraconique, l'acide mésaconique et l'acide glutaconique.

7. Polyester et procédé selon l'une quelconque des revendications précédentes, ayant une somme de l'indice d'acide et de l'indice de groupes OH selon DIN 53240, section 2, de jusqu'à 500 mg.

8. Utilisation de polyesters selon l'une quelconque des revendications 1 à 7, ayant une température de transition vitreuse Tg de -40 °C à 60 °C, dans des encres d'impression.

9. Utilisation de polyesters selon l'une quelconque des revendications 1 à 7, comme agents de thixotropie, en tant que composants pour la production de polymères de polyaddition ou de polycondensation dans des adhésifs, des matériaux d'étanchéité, des élastomères à couler ou des mousses.

10. Encres d'impression, adhésifs, revêtements mousses, enduits et peintures, contenant au moins un polyester hautement fonctionnel, hautement ou hyper-ramifié selon l'une quelconque des revendications 1 ou 3 à 7 ou des produits de polyaddition ou de polycondensation obtenus à partir d'un polyester hautement fonctionnel, hautement ou hyper-ramifié selon l'une quelconque des revendications 1 ou 3 à 7.
